# EUROPEAN PATENT APPLICATION

(11) **EP 4 648 547 A2**
(43) Date of publication of application: **12.11.2025**
(21) Application number: 25184748.9
(22) Date of filing: 28.06.2021
(51) Int. Cl.: H04W 84/12

(54) **MULTI-LINK COMMUNICATION METHOD, TRAFFIC-TO-LINK MAPPING METHOD, AND DEVICE**

(30) Priority: 21.08.2020 CN 202010852529
(62) Divisional of application: 21857350.9
(71) Applicant: Huawei Technologies Co., Ltd., Shenzhen, Guangdong 518129 (CN)
(72) Inventor: GUO, Yuchen, Shenzhen, 518129 (CN); GAN, Ming, Shenzhen, 518129 (CN); LI, Yunbo, Shenzhen, 518129 (CN); LI, Yiqing, Shenzhen, 518129 (CN); HUANG, Guogang, Shenzhen, 518129 (CN)
(74) Representative: Isarpatent

(57) **Abstract**

Embodiments of this application relate to a multi-link communication method, a traffic-to-link mapping method, and a device. When a multi-link device performs multi-link establishment, the multi-link device may establish, based on a requirement, multi-link communication on a part of or all links supported by the multi-link device. In subsequent communication, a link may be further added or deleted from an established multi-link communication link based on a requirement. In this way, flexibility of multi-link communication can be improved, and a requirement of the multi-link device for dynamically updating the communication link can be met. In addition, the multi-link device may further establish a traffic-to-link mapping relationship during multi-link establishment, or update the traffic-to-link mapping relationship after completing multi-link establishment, to manage traffic transmission more flexibly and improve quality of service of traffic.

## Description

### CROSS-REFERENCE TO RELATED APPLICATIONS

This application claims priority to Chinese Patent Application No. 202010852529.1, filed with the China National Intellectual Property Administration on August 21, 2020 and entitled "MULTI-LINK COMMUNICATION METHOD, TRAFFIC-TO-LINK MAPPING METHOD, AND DEVICE", which is incorporated herein by reference in its entirety.

### TECHNICAL FIELD

This application relates to the field of communication technologies, and in particular, to a multi-link communication method, a traffic-to-link mapping method, and a device.

### BACKGROUND

With development of wireless technologies, more wireless devices support multi-link communication. For example, the devices support simultaneous communication on 2.4 GHz, 5 GHz, and 6 GHz frequency bands, or support communication on different channels of a same frequency band. This improves a communication rate between wireless devices. A wireless device that supports multi-link communication is usually referred to as a multi-link device (multi-link device, MLD).

Multi-link establishment needs to be performed before MLDs communicate with each other. For example, a first multi-link device sends an association request frame to a second multi-link device to perform multi-link establishment, where the association request frame carries information about a link, supported by the first multi-link device, on which the first multi-link device wants to establish multi-link communication.

However, in an actual application, an MLD may not have a communication requirement on each link supported by the MLD at the beginning. If the MLD establishes multi-link communication on all links supported by the MLD at the beginning, link resource utilization is low. In a subsequent communication process, the MLD may further have a requirement for updating a communication link. However, at the beginning, the multi-link device provides only information about a link on which the multi-link device wants to establish multi-link communication. This cannot meet the requirement for updating the communication link. It can be learned that multi-link communication in the conventional technology has a technical problem that flexibility is poor and an actual application requirement cannot be met.

### SUMMARY

Embodiments of this application provide a multi-link communication method, a traffic-to-link mapping method, and a device, so that flexibility of multi-link communication performed by a multi-link device can be improved, and a requirement of dynamically updating a communication link by the multi-link device can be met. In addition, traffic transmission can be more flexibly managed, and quality of service of traffic can be improved.

According to a first aspect, a multi-link communication method is provided. The method includes: A first multi-link device receives a first request message sent by a second multi-link device, where the first request message carries identifiers of at least two links and first indication information of each of the at least two links, the first indication information indicates an operation type of the link, the operation type includes establishing multi-link communication, and further includes providing only link information or not establishing multi-link communication. The first multi-link device sends a first response message to the second multi-link device, where the first response message carries the identifiers of the at least two links and second indication information of each of the at least two links, and the second indication information indicates a status of the link.

In this embodiment of this application, the first request message carries the first indication information, and the first response message carries the second indication information, so that during multi-link establishment, the multi-link device may select, based on a requirement, to establish multi-link communication on a part of links supported by the multi-link device. This can improve flexibility of multi-link communication performed by the multi-link device.

In a possible implementation, the operation type further includes: adding a link to a multi-link communication link; and/or deleting a link from the multi-link communication link.

In this implementation, the first request message carries the first indication information, and the first response message carries the second indication information, so that after completing multi-link establishment, the multi-link device may add a link to or delete a link from the established multi-link communication link based on a communication requirement. This can further improve flexibility of multi-link communication performed by the multi-link device, and better meet a requirement of dynamically updating the communication link by the multi-link device.

In a possible implementation, the status includes any one or more of the following items: the multi-link communication is successfully established; the multi-link communication fails to be established; only the link information is provided or the multi-link communication is not established; the link is successfully added; the link fails to be added; the link is successfully deleted; or the link fails to be deleted.

In this implementation, there are multiple link statuses, further improving flexibility of multi-link communication.

In a possible implementation, the first indication information and/or the second indication information are/is carried in a first preset field in a multi-link information element.

This implementation is simple and easy to implement.

In a possible implementation, in the multi-link information element carried in the first request message, a first value of the first preset field indicates that the operation type is establishing multi-link communication, and a second value of the first preset field indicates that the operation type is providing only link information or not establishing multi-link communication. Alternatively, in the multi-link information element carried in the first response message, a first value of the first preset field indicates that the status is that the multi-link communication is successfully established, a second value of the first preset field indicates that the status is that the multi-link communication fails to be established, and a third value of the first preset field indicates that the status is that only the link information is provided or the multi-link communication is not established.

In this implementation, when the multi-link information element is located in the association request frame and the association response frame, values of the first preset field may each indicate a different meaning. The meaning indicated by the value of the first preset field may be determined based on a type (namely, the association request frame and the association response frame) of a frame in which the first preset field is located and based on the value of the first preset field, so that bits occupied by the first preset field can be reduced.

In a possible implementation, in the multi-link information element carried in the first request message or the first response message, a value of the first preset field includes any one or more of the following items:
a first value, indicating that the operation type is establishing multi-link communication;
a second value, indicating that the status is that the multi-link communication is successfully established;
a third value, indicating that the status is that the multi-link communication fails to be established; or
a fourth value, indicating that the operation type or the status is that only the link information is provided or the multi-link communication is not established.

In this implementation, when the multi-link information element is located in the association request frame and the association response frame, a value of the first preset field may indicate a same meaning, and the meaning indicated by the value of the first preset field may be directly determined based on the value of the first preset field. This can reduce complexity of identifying the first preset field by the multi-link device.

In a possible implementation, in the multi-link information element carried in the first request message, a first value of the first preset field indicates that the operation type is adding a link to a multi-link communication link, and a second value of the first preset field indicates that the operation type is deleting a link from the multi-link communication link. Alternatively, in the multi-link information element carried in the first response message, a first value of the first preset field indicates that the status is that the link is successfully added, a second value of the first preset field indicates that the status is that the link fails to be added, a third value of the first preset field indicates that the status is that the link is successfully deleted, and a fourth value of the first preset field indicates that the status is that the link fails to be deleted.

In this implementation, when the multi-link information element is located in a reassociation request frame and a reassociation response frame, values of the first preset field may each indicate a different meaning. The meaning indicated by the value of the first preset field may be determined based on a type (namely, the reassociation request frame and the reassociation response frame) of a frame in which the first preset field is located and based on the value of the first preset field, so that bits occupied by the first preset field can be reduced.

In a possible implementation, in the multi-link information element carried in the first request message or the first response message, a value of the first preset field includes any one or more of the following items:
a first value, indicating that the operation type is adding a link to a multi-link communication link;
a second value, indicating that the operation type is deleting a link from the multi-link communication link;
a third value, indicating that the status is that the link is successfully added;
a fourth value, indicating that the status is that the link fails to be added;
a fifth value, indicating that the status is that the link is successfully deleted; or
a sixth value, indicating that the status is that the link fails to be deleted.

In this implementation, when the multi-link information element is located in the reassociation request frame and the reassociation response frame, a value of the first preset field may indicate a same meaning, and the meaning indicated by the value of the first preset field may be directly determined based on the value of the first preset field. This can reduce complexity of identifying the first preset field by the multi-link device.

In a possible implementation, in the multi-link information element carried in the first request message or the first response message, a value of the first preset field includes any one or more of the following items:
a first value, indicating that the operation type is establishing multi-link communication;
a second value, indicating that the status is that the multi-link communication is successfully established;
a third value, indicating that the status is that the multi-link communication fails to be established; and
a fourth value, indicating that the operation type or the status is that only the link information is provided or the multi-link communication is not established;
a fifth value, indicating that the operation type is adding a link to a multi-link communication link;
a sixth value, indicating that the operation type is deleting a link from the multi-link communication link;
a seventh value, indicating that the status is that the link is successfully added;
an eighth value, indicating that the status is that the link fails to be added;
a ninth value, indicating that the status is that the link is successfully deleted; or
a tenth value, indicating that the status is that the link fails to be deleted.

In this implementation, when the multi-link information element is located in the association request frame, the association response frame, the reassociation request frame, and the reassociation response frame, a value of the first preset field may indicate a same meaning, and the meaning indicated by the value of the first preset field may be directly determined based on the value of the first preset field. This can further reduce complexity of identifying the first preset field by the multi-link device.

In a possible implementation, if the operation type is establishing multi-link communication, not establishing multi-link communication, providing only the link information, or adding the link to the multi-link communication link, the first request message further carries capability information of a station. Alternatively, if the operation type is deleting the link from the multi-link communication link, the first request message does not carry capability information of a station.

In this implementation, if the operation type is deleting the link from the multi-link communication link, the first request message does not carry capability information of a station. This can reduce resource overheads while ensuring reliability of the solution.

In a possible implementation, the multi-link information element further carries information about a new link of an access point device. A multi-link device MLD common information field of the multi-link information element carries third indication information, indicating that the multi-link information element carries information about the new link.

In this implementation, the multi-link device starts a new link based on a communication requirement, and notifies another multi-link device in time, to further improve flexibility of multi-link communication, and better meet a requirement of dynamically updating a communication link by the multi-link device.

In a possible implementation, the information about the new link is carried in each beacon frame of N consecutive beacon frames, and N is a positive integer.

In this way, it can be ensured that the information about the new link can be effectively received by another multi-link device, and reliability of the solution can be further improved.

According to a second aspect, a multi-link communication method is provided. The method includes: A first multi-link device receives a first request message sent by a second multi-link device, where the first request message carries identifiers of at least two links and first indication information of each of the at least two links, the first indication information indicates an operation type of the link, the operation type includes adding a link to a multi-link communication link, and further includes providing only link information or not establishing multi-link communication. The first multi-link device sends a first response message to the second multi-link device, where the first response message carries the identifiers of the at least two links and second indication information of each of the at least two links, and the second indication information indicates a status of the link.

In this embodiment of this application, the first request message carries the first indication information, and the first response message carries the second indication information, so that the multi-link device adds the link to the established multi-link communication link based on a requirement. In addition, information about another link that does not need to establish multi-link communication is further provided, so that the multi-link device subsequently adds a link based on a requirement. This can improve flexibility of multi-link communication performed by the multi-link device.

In a possible implementation, the operation type further includes: establishing multi-link communication; and/or deleting a link from the multi-link communication link.

In a possible implementation, the status includes any one or more of the following items: the multi-link communication is successfully established; the multi-link communication fails to be established; only the link information is provided or the multi-link communication is not established; the link is successfully added; the link fails to be added; the link is successfully deleted; or the link fails to be deleted.

According to a third aspect, a multi-link communication method is provided. The method includes: A first multi-link device receives a first request message sent by a second multi-link device, where the first request message carries identifiers of at least two links and first indication information of each of the at least two links, the first indication information indicates an operation type of the link, the operation type includes deleting a link to a multi-link communication link, and further includes providing only link information or not establishing multi-link communication. The first multi-link device sends a first response message to the second multi-link device, where the first response message carries the identifiers of the at least two links and second indication information of each of the at least two links, and the second indication information indicates a status of the link.

In this embodiment of this application, the first request message carries the first indication information, and the first response message carries the second indication information, so that the multi-link device deletes the link from the established multi-link communication link based on a requirement. In addition, information about another link that does not need to establish multi-link communication is further provided, so that the multi-link device subsequently adds a link based on a requirement. This can improve flexibility of multi-link communication performed by the multi-link device.

In a possible implementation, the operation type further includes: establishing multi-link communication; and/or adding a link to the multi-link communication link.

In a possible implementation, the status includes any one or more of the following items: the multi-link communication is successfully established; the multi-link communication fails to be established; only the link information is provided or the multi-link communication is not established; the link is successfully added; the link fails to be added; the link is successfully deleted; or the link fails to be deleted.

According to a fourth aspect, a multi-link communication method is provided. The method includes: A second multi-link device sends a first request message to a first multi-link device, where the first request message carries identifiers of at least two links and first indication information of each of the at least two links, the first indication information indicates an operation type of the link, the operation type includes establishing multi-link communication, and further includes providing only link information or not establishing multi-link communication. The second multi-link device receives a first response message from the first multi-link device, where the first response message carries the identifiers of the at least two links and second indication information of each of the at least two links, and the second indication information indicates a status of the link.

In a possible implementation, the operation type further includes: adding a link to a multi-link communication link; and/or deleting a link from the multi-link communication link.

In a possible implementation, the status includes any one or more of the following items: the multi-link communication is successfully established; the multi-link communication fails to be established; only the link information is provided or the multi-link communication is not established; the link is successfully added; the link fails to be added; the link is successfully deleted; or the link fails to be deleted.

In a possible implementation, the first indication information and/or the second indication information are/is carried in a first preset field in a multi-link information element.

In a possible implementation, in the multi-link information element carried in the first request message, a first value of the first preset field indicates that the operation type is establishing multi-link communication, and a second value of the first preset field indicates that the operation type is providing only link information or not establishing multi-link communication. Alternatively, in the multi-link information element carried in the first response message, a first value of the first preset field indicates that the status is that the multi-link communication is successfully established, a second value of the first preset field indicates that the status is that the multi-link communication fails to be established, and a third value of the first preset field indicates that the status is that only the link information is provided or the multi-link communication is not established.

In a possible implementation, in the multi-link information element carried in the first request message or the first response message, a value of the first preset field includes any one or more of the following items:
a first value, indicating that the operation type is establishing multi-link communication;
a second value, indicating that the status is that the multi-link communication is successfully established;
a third value, indicating that the status is that the multi-link communication fails to be established; or
a fourth value, indicating that the operation type or the status is that only the link information is provided or the multi-link communication is not established.

In a possible implementation, if the operation type is establishing multi-link communication, not establishing multi-link communication, providing only the link information, or adding the link to the multi-link communication link, the first request message further carries capability information of a station. Alternatively, if the operation type is deleting the link from the multi-link communication link, the first request message does not carry capability information of a station.

In a possible implementation, the multi-link information element further carries information about a new link of an access point device.

A multi-link device MLD common information field of the multi-link information element carries third indication information, indicating that the multi-link information element carries information about the new link.

In a possible implementation, the information about the new link is carried in each beacon frame of N consecutive beacon frames, and N is a positive integer.

For technical effects brought by the fourth aspect or the possible implementations of the fourth aspect, refer to the description of the technical effects of the first aspect or the possible implementations of the first aspect.

According to a fifth aspect, a multi-link communication method is provided. The method includes: A second multi-link device sends a first request message to a first multi-link device, where the first request message carries identifiers of at least two links and first indication information of each of the at least two links, the first indication information indicates an operation type of the link, the operation type includes adding a link to a multi-link communication link, and further includes providing only link information or not establishing multi-link communication. The second multi-link device receives a first response message from the first multi-link device, where the first response message carries the identifiers of the at least two links and second indication information of each of the at least two links, and the second indication information indicates a status of the link.

In a possible implementation, the operation type further includes: establishing multi-link communication; and/or deleting a link from the multi-link communication link.

In a possible implementation, the status includes any one or more of the following items: the multi-link communication is successfully established; the multi-link communication fails to be established; only the link information is provided or the multi-link communication is not established; the link is successfully added; the link fails to be added; the link is successfully deleted; or the link fails to be deleted.

For technical effects brought by the fifth aspect or the possible implementations of the fifth aspect, refer to the description of the technical effects brought by the second aspect or the possible implementations of the second aspect.

According to a sixth aspect, a multi-link communication method is provided. The method includes: A second multi-link device sends a first request message to a first multi-link device, where the first request message carries identifiers of at least two links and first indication information of each of the at least two links, the first indication information indicates an operation type of the link, the operation type includes deleting a link to a multi-link communication link, and further includes providing only link information or not establishing multi-link communication. The second multi-link device receives a first response message from the first multi-link device, where the first response message carries the identifiers of the at least two links and second indication information of each of the at least two links, and the second indication information indicates a status of the link.

In a possible implementation, the operation type further includes: establishing multi-link communication; and/or adding a link to the multi-link communication link.

In a possible implementation, the status includes any one or more of the following items: the multi-link communication is successfully established; the multi-link communication fails to be established; only the link information is provided or the multi-link communication is not established; the link is successfully added; the link fails to be added; the link is successfully deleted; or the link fails to be deleted.

For technical effects brought by the sixth aspect or the possible implementations of the sixth aspect, refer to the descriptions of the technical effects brought by the third aspect or the possible implementations of the third aspect.

According to a seventh aspect, a multi-link communication method is provided. The method includes: A first multi-link device receives a second message from a second multi-link device, where the second message carries traffic-to-link mapping information. The first multi-link device establishes or updates a traffic-to-link mapping relationship based on the mapping information.

In this embodiment of this application, the second multi-link device adds the traffic-to-link mapping information to the second message, so that the first multi-link device can further establish a traffic-to-link mapping relationship during multi-link establishment, or update the traffic-to-link mapping relationship after completing multi-link establishment, to manage traffic transmission more flexibly and improve quality of service.

In a possible implementation, the second message further carries fourth indication information, and the fourth indication information indicates a second mode used for negotiating a traffic identifier-to-link mapping. Before the first multi-link device receives second message from a second multi-link device, the method further includes: The first multi-link device sends a third message to the second multi-link device, where the third message carries fifth indication information, and the fifth indication information indicates a first mode used for negotiating a traffic identifier-to-link mapping.

In this implementation, the first multi-link device and the second multi-link device may negotiate the traffic identifier-to-link mapping, so that flexibility of traffic transmission can be further improved.

In a possible implementation, the first mode is: a traffic-to-link mapping is requested to be established, but a specific traffic-to-link mapping method is not carried; a traffic-to-link mapping is requested to be established, a suggested mapping method is carried, and a responder is allowed to modify a mapping relationship in a response frame; or a traffic-to-link mapping is requested to be established, a demanded mapping method is carried, and a responder is not allowed to modify a mapping relationship in a response frame.

It should be understood that the foregoing several types are merely examples of the first mode rather than limitations.

In a possible implementation, the second mode is: the traffic-to-link mapping is successfully established, and a final mapping method is carried; the traffic-to-link mapping is not successfully established, and the suggested mapping method is carried; the traffic-to-link mapping is not successfully established, the demanded mapping method is carried, and if a requester sends a request again, the mapping can be successfully established only by using the mapping method; or the traffic-to-link mapping fails to be established.

It should be understood that the foregoing several are merely examples of the second mode rather than limitations.

In a possible implementation, the second message is an association response frame or an EHT action frame.

In a possible implementation, the second message is a broadcast message.

In this implementation, the second multi-link device may directly broadcast traffic-to-link mapping information, to further improve flexibility of traffic transmission.

In a possible implementation, before the first multi-link device receives the second message from the second multi-link device, the method further includes: The first multi-link device sends a fourth message to the second multi-link device, where the fourth message carries seventh indication information, and the seventh indication information indicates that the first multi-link device supports broadcast traffic-to-link mapping information.

In this implementation, the first multi-link device notifies the second multi-link device in advance that the first multi-link device supports the broadcast traffic-to-link mapping information, so that the second multi-link device may notify, in a broadcast mode, the first multi-link device to establish or update the traffic-to-link mapping relationship. This improves reliability of the solution.

In a possible implementation, the second message further carries eighth indication information, indicating an accumulative quantity of updates of traffic-to-link mapping information.

In this way, after receiving the second message (broadcast message), a multi-link device that wakes up after sleep may learn an update status of the traffic-to-link mapping information in time, and determine whether the multi-link device needs to update the traffic-to-link mapping relationship.

In a possible implementation, the second message is an association response frame or a beacon frame.

In a possible implementation, the second message further includes ninth indication information, indicating a traffic direction of the traffic-to-link mapping, and the traffic direction is any one of uplink, downlink, or uplink and downlink.

In this implementation, the multi-link device may establish or update the traffic-to-link mapping relationship only for uplink transmission, or may establish or update the traffic-to-link mapping relationship only for downlink transmission, or may establish or update the traffic-to-link mapping relationship only for uplink and downlink transmission. This further improves flexibility of traffic management.

In a possible implementation, the traffic-to-link mapping information is carried in a media access control MAC header or in an information element indicating the traffic-to-link mapping relationship.

In a possible implementation, the information element indicating the traffic-to-link mapping relationship carries a second preset field, and when the second preset field is a preset value, the second preset field indicates the first multi-link device to map each traffic identifier to each link on which multi-link communication is established.

In a possible implementation, when the second preset field is a preset value, the information element indicating the traffic-to-link mapping relationship does not carry the traffic-to-link mapping information.

In this way, resource overheads can be reduced.

In a possible implementation, the fourth indication information and/or the fifth indication information are/is carried in a third preset field in an information element indicating the traffic-to-link mapping relationship; and in the information element indicating the traffic-to-link mapping relationship carried in the third message or the fourth message, a value of the third preset field includes any one or more of the following items:
a first value, indicating that the second mode is that a traffic-to-link mapping is requested to be established, but a specific traffic-to-link mapping method is not carried;
a second value, indicating that the second mode is that a traffic-to-link mapping is requested to be established, a suggested mapping method is carried, and a responder is allowed to modify a mapping relationship in a response frame;
a third value, indicating that the second mode is that a traffic-to-link mapping is requested to be established, a demanded mapping method is carried, and a responder is not allowed to modify a mapping relationship in a response frame;
a fourth value, indicating that the first mode is that the traffic-to-link mapping is successfully established, and a final mapping method is carried;
a fifth value, indicating that the first mode is that the traffic-to-link mapping is not successfully established, and the suggested mapping method is carried;
a sixth value, indicating that the first mode is that the traffic-to-link mapping is not successfully established, the demanded mapping method is carried, and if a requester sends a request again, the mapping can be successfully established only by using the mapping method; or
a seventh value, indicating that the first mode is that the traffic-to-link mapping fails to be established.

It should be understood that the foregoing seven values are merely examples rather than limitations. During specific implementation, the value of the third preset field may be only a part of the foregoing seven values, or may further include a value other than the foregoing seven values.

In a possible implementation, the traffic-to-link mapping information includes: one or more link profile fields, where each link profile field includes identifier information of one link and identifier information of one or more pieces of traffic mapped to the link; or one or more traffic profile fields, where each traffic profile field includes identifier information of one traffic and identifier information of one or more links to which the traffic is mapped.

This implementation provides two different implementations of the traffic-to-link mapping information, and can further improve flexibility of the solution.

According to an eighth aspect, a multi-link communication method is provided. The method includes: A second multi-link device generates a second message, where the second message carries traffic-to-link mapping information. The second multi-link device sends the second message to a first multi-link device.

In a possible implementation, the second message further carries fourth indication information, and the fourth indication information indicates a second mode used for negotiating a traffic identifier-to-link mapping. Before the second multi-link device generates the second message, the method further includes: The second multi-link device receives a third message from the first multi-link device, where the third message carries fifth indication information, and the fifth indication information indicates a first mode used for negotiating a traffic identifier-to-link mapping.

In a possible implementation, the first mode is: a traffic-to-link mapping is requested to be established, but a specific traffic-to-link mapping method is not carried; a traffic-to-link mapping is requested to be established, a suggested mapping method is carried, and a responder is allowed to modify a mapping relationship in a response frame; or a traffic-to-link mapping is requested to be established, a demanded mapping method is carried, and a responder is not allowed to modify a mapping relationship in a response frame.

In a possible implementation, the second mode is: the traffic-to-link mapping is successfully established, and a final mapping method is carried; the traffic-to-link mapping is not successfully established, and the suggested mapping method is carried; the traffic-to-link mapping is not successfully established, the demanded mapping method is carried, and if a requester sends a request again, the mapping can be successfully established only by using the mapping method; or the traffic-to-link mapping fails to be established.

In a possible implementation, the second message is an association response frame or an EHT action frame.

In a possible implementation, the second message is a broadcast message.

In a possible implementation, before the second multi-link device generates the second message, the method further includes: The second multi-link device receives a fourth message from a first multi-link device, where the fourth message carries seventh indication information, and the seventh indication information indicates that the first multi-link device supports broadcast traffic-to-link mapping information.

In a possible implementation, the second message further carries eighth indication information, indicating an accumulative quantity of updates of traffic-to-link mapping information.

In a possible implementation, the second message is an association response frame or a beacon frame.

In a possible implementation, the second message further includes ninth indication information, indicating a traffic direction of the traffic-to-link mapping, and the traffic direction is any one of uplink, downlink, or uplink and downlink.

In a possible implementation, the traffic-to-link mapping information is carried in a media access control MAC header or in an information element indicating the traffic-to-link mapping relationship.

In a possible implementation, the information element indicating the traffic-to-link mapping relationship carries a second preset field, and when the second preset field is a preset value, the second preset field indicates the first multi-link device to map each traffic identifier to each link on which multi-link communication is established.

In a possible implementation, when the second preset field is a preset value, the information element indicating the traffic-to-link mapping relationship does not carry the traffic-to-link mapping information.

In a possible implementation, the fourth indication information and/or the fifth indication information are/is carried in a third preset field in an information element indicating the traffic-to-link mapping relationship; and in the information element indicating the traffic-to-link mapping relationship carried in the third message or the fourth message, a value of the third preset field includes any one or more of the following items:
a first value, indicating that the second mode is that a traffic-to-link mapping is requested to be established, but a specific traffic-to-link mapping method is not carried;
a second value, indicating that the second mode is that a traffic-to-link mapping is requested to be established, a suggested mapping method is carried, and a responder is allowed to modify a mapping relationship in a response frame;
a third value, indicating that the second mode is that a traffic-to-link mapping is requested to be established, a demanded mapping method is carried, and a responder is not allowed to modify a mapping relationship in a response frame;
a fourth value, indicating that the first mode is that the traffic-to-link mapping is successfully established, and a final mapping method is carried;
a fifth value, indicating that the first mode is that the traffic-to-link mapping is not successfully established, and the suggested mapping method is carried;
a sixth value, indicating that the first mode is that the traffic-to-link mapping is not successfully established, the demanded mapping method is carried, and if a requester sends a request again, the mapping can be successfully established only by using the mapping method; or
a seventh value, indicating that the first mode is that the traffic-to-link mapping fails to be established.

It should be understood that the foregoing seven values are merely examples rather than limitations. During specific implementation, the value of the third preset field may be only a part of the foregoing seven values, or may further include a value other than the foregoing seven values.

In a possible implementation, the traffic-to-link mapping information includes: one or more link profile fields, where each link profile field includes identifier information of one link and identifier information of one or more pieces of traffic mapped to the link; or one or more traffic profile fields, where each traffic profile field includes identifier information of one traffic and identifier information of one or more links to which the traffic is mapped.

For technical effects brought by the eighth aspect or the possible implementations of the eighth aspect, refer to the description of the technical effects brought by the seventh aspect or the possible implementations of the seventh aspect.

According to a ninth aspect, a multi-link device is provided. The device includes a module configured to perform the method according to any one of the first aspect or the possible implementations of the first aspect or any one of the second aspect or the possible implementations of the second aspect or any one of the third aspect or the possible implementations of the third aspect.

For example, the device includes a transceiver module.

The transceiver module is configured to receive a first request message sent by a second multi-link device, where the first request message carries identifiers of at least two links and first indication information of each of the at least two links, and the first indication information indicates an operation type of the link. The operation type includes establishing multi-link communication, adding a link to a multi-link communication link, or deleting a link from the multi-link communication link, and the operation type further includes providing information only about a link or not establishing multi-link communication.

The transceiver module is further configured to send a first response message to the second multi-link device, where the first response message carries the identifiers of the at least two links and second indication information of each of the at least two links, and the second indication information indicates a status of the link.

According to a tenth aspect, a multi-link device is provided. The device includes a module configured to perform the method according to any one of the fourth aspect or the possible implementations of the fourth aspect or any one of the fifth aspect or the possible implementations of the fifth aspect or any one of the sixth aspect or the possible implementations of the sixth aspect.

For example, the device includes a transceiver module.

The transceiver module is configured to send a first request message to a first multi-link device, where the first request message carries identifiers of at least two links and first indication information of each of the at least two links, and the first indication information indicates an operation type of the link. The operation type includes establishing multi-link communication, adding a link to a multi-link communication link, or deleting a link from the multi-link communication link, and the operation type further includes providing information only about a link or not establishing multi-link communication.

The transceiver module is further configured to receive a first response message from the first multi-link device, where the first response message carries the identifiers of the at least two links and second indication information of each of the at least two links, and the second indication information indicates a status of the link.

According to an eleventh aspect, a multi-link device is provided. The device includes a module configured to perform the method according to any one of the seventh aspect or the possible implementations of the seventh aspect.

For example, the device includes:
a transceiver module, configured to receive a second message from a second multi-link device, a second message, where the second message carries traffic-to-link mapping information; and
a processing module, configured to establish or update a traffic-to-link mapping relationship based on the mapping information.

According to a twelfth aspect, a multi-link device is provided. The device includes a module configured to perform the method according to any one of the eighth aspect or the possible implementations of the eighth aspect.

For example, the device includes:
a processing module, configured to generate a second message; and
a transceiver module, configured to send the second message to a first multi-link device.

According to a thirteenth aspect, a multi-link device is provided. The multi-link device includes a processor, where the processor is coupled to a memory. The processor is configured to execute a computer program or instructions stored in the memory, so that the device performs the method according to any one of the first aspect or the possible implementations of the first aspect, or any one of the second aspect or the possible implementations of the second aspect, or any one of the third aspect or the possible implementations of the third aspect, or any one of the fourth aspect or the possible implementations of the fourth aspect, or any one of the fifth aspect or the possible implementations of the fifth aspect, or any one of the sixth aspect or the possible implementations of the sixth aspect, or any one of the seventh aspect or the possible implementations of the seventh aspect, or any one of the eighth aspect or the possible implementations of the eighth aspect.

Optionally, the memory is located outside the device.

Optionally, the device includes the memory. The memory is connected to the at least one processor, and the memory stores the instructions that can be executed by the at least one processor.

According to a fourteenth aspect, a chip is provided. The chip is coupled to a memory, and is configured to read and execute program instructions stored in the memory, so that the method according to any one of the first aspect or the possible implementations of the first aspect, or any one of the second aspect or the possible implementations of the second aspect, or any one of the third aspect or the possible implementations of the third aspect, or any one of the fourth aspect or the possible implementations of the fourth aspect, or any one of the fifth aspect or the possible implementations of the fifth aspect, or any one of the sixth aspect or the possible implementations of the sixth aspect, or any one of the seventh aspect or the possible implementations of the seventh aspect, or any one of the eighth aspect or the possible implementations of the eighth aspect is performed.

According to a fifteenth aspect, a computer program product is provided, including instructions. When the instructions are run on a computer, the method according to any one of the first aspect or the possible implementations of the first aspect, or any one of the second aspect or the possible implementations of the second aspect, or any one of the third aspect or the possible implementations of the third aspect, or any one of the fourth aspect or the possible implementations of the fourth aspect, or any one of the fifth aspect or the possible implementations of the fifth aspect, or any one of the sixth aspect or the possible implementations of the sixth aspect, or any one of the seventh aspect or the possible implementations of the seventh aspect, or any one of the eighth aspect or the possible implementations of the eighth aspect is performed.

According to a sixteenth aspect, a computer-readable storage medium is provided, including a program or instructions. When the program or the instructions are run on a computer, the method according to any one of the first aspect or the possible implementations of the first aspect, or any one of the second aspect or the possible implementations of the second aspect, or any one of the third aspect or the possible implementations of the third aspect, or any one of the fourth aspect or the possible implementations of the fourth aspect, or any one of the fifth aspect or the possible implementations of the fifth aspect, or any one of the sixth aspect or the possible implementations of the sixth aspect, or any one of the seventh aspect or the possible implementations of the seventh aspect, or any one of the eighth aspect or the possible implementations of the eighth aspect is performed.

### BRIEF DESCRIPTION OF DRAWINGS

FIG. 1 is a network diagram of an architecture of a communication system to which an embodiment of this application is applicable;
FIG. 2 is a schematic diagram of a structure of a multi-link device 200 according to an embodiment of this application;
FIG. 3 is a schematic diagram of a structure of a multi-link device 300 according to an embodiment of this application;
FIG. 4 is a flowchart of a multi-link communication method according to an embodiment of this application;
FIG. 5 is a schematic diagram of a multi-link information element according to an embodiment of this application;
FIG. 6 is a schematic diagram of another multi-link information element according to an embodiment of this application;
FIG. 7A is a schematic diagram of another multi-link information element according to an embodiment of this application;
FIG. 7B is a schematic diagram of another multi-link information element according to an embodiment of this application;
FIG. 8 is a schematic diagram of another multi-link information element according to an embodiment of this application;
FIG. 9 is a flowchart of a traffic-to-link mapping method according to an embodiment of this application;
FIG. 10A is a schematic diagram of a possible MAC header according to an embodiment of this application;
FIG. 10B is a schematic diagram of a possible traffic identifier bitmap according to an embodiment of this application;
FIG. 10C is a schematic diagram of another possible MAC header according to an embodiment of this application;
FIG. 10D is a schematic diagram of another possible MAC header according to an embodiment of this application;
FIG. 10E is a schematic diagram of another possible link identifier bitmap according to an embodiment of this application;
FIG. 10F is a schematic diagram of another possible MAC header according to an embodiment of this application;
FIG. 11A is a schematic diagram of a traffic identifier-to-link mapping information element according to an embodiment of this application;
FIG. 11B is a schematic diagram of another traffic identifier-to-link mapping information element according to an embodiment of this application;
FIG. 11C is a schematic diagram of another traffic identifier-to-link mapping information element according to an embodiment of this application;
FIG. 11D is a schematic diagram of another traffic identifier-to-link mapping information element according to an embodiment of this application;
FIG. 11E is a schematic diagram of another traffic identifier-to-link mapping information element according to an embodiment of this application;
FIG. 12 is a schematic diagram of another possible traffic identifier-to-link mapping information element according to an embodiment of this application;
FIG. 13 is a schematic diagram of another possible traffic identifier-to-link mapping information element according to an embodiment of this application;
FIG. 14 is a flowchart of a method for updating an identifier-to-link mapping relationship according to an embodiment of this application;
FIG. 15 is a schematic diagram of a possible frame structure of an EHT action frame according to an embodiment of this application;
FIG. 16 is a schematic diagram of a traffic identifier-to-link mapping information element carried in a beacon frame according to an embodiment of this application; and
FIG. 17 is a schematic diagram of another possible traffic identifier-to-link mapping information element according to an embodiment of this application.

### DESCRIPTION OF EMBODIMENTS

The technical solutions in embodiments of this application may be applied to various communication systems, for example, a 4th generation (4th generation, 4G) communication system, a 5th generation (5th generation, 5G) communication system, a 6th generation (6th generation, 6G) communication system, another future evolved system, or various other wireless communication systems using a radio access technology. The technical solutions in embodiments of this application may be used provided that there is a requirement for multi-link communication in the communication system.

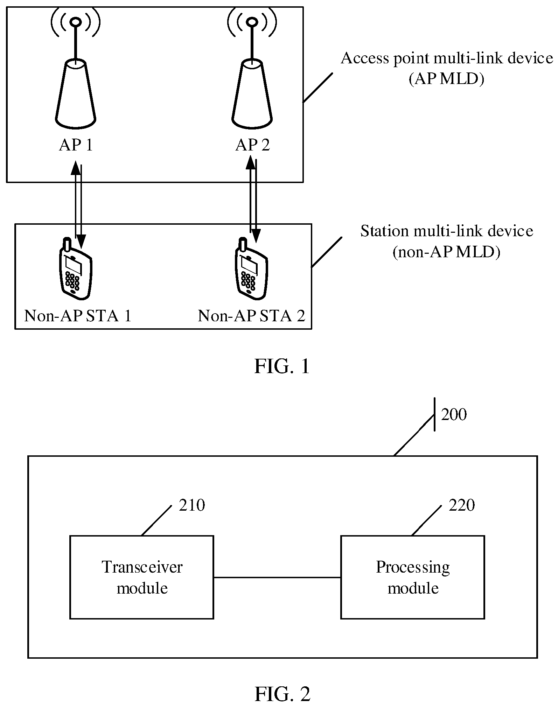

For example, FIG. 1 is a network diagram of an architecture of a communication system to which an embodiment of this application is applicable. The communication system includes at least one access point station multi-link device (AP station multi-link device, AP STA MLD) and at least one non-access point station multi-link device (non-AP station multi-link device, non-AP STA MLD). The access point station multi-link device may also be referred to as an access point multi-link device or an access point device for short, and an English abbreviation AP STA MLD corresponding to the access point station multi-link device may be replaced with an AP MLD. The non-access point station multi-link device may also be referred to as a station multi-link device or a station device for short, and an English abbreviation non-AP STAMLD corresponding to the non-AP station multi-link device may be replaced with a STA MLD or a non-AP MLD. The AP MLD includes one or more access points (Access Point, AP), and the non-AP MLD includes one or more non-AP stations (non-AP Station, non-AP STA). It should be understood that, the communication system shown in FIG. 1 uses one AP MLD and one non-AP MLD as an example. In actual application, the communication system may further include more AP MLDs or non-AP MLDs, the AP MLD may further include more or fewer APs, and the non-AP MLD may further include more or fewer non-AP STAs. This is not limited in this embodiment of this application.

In this embodiment of this application, the multi-link devices may communicate with each other after an association relationship (or a communication link) is established between the multi-link devices. For example, one or more non-AP STAs in the station multi-link device may communicate with one or more APs in the access point multi-link device after establishing an association relationship. As shown in FIG. 1, an AP 1 is associated with a non-AP STA 1, and an AP 2 is associated with a non-AP STA 2A. Certainly, the station multi-link device and the station multi-link device may also communicate with each other, namely, device-to-device (device to device, D2D) communication.

For ease of description, in the following embodiments, an example in which a first multi-link device and a second multi-link device perform multi-link communication is mainly used for description. The first multi-link device is an AP MLD, and the second multi-link device is a non-AP MLD; or the second multi-link device is an AP MLD, and the first multi-link device is a non-AP MLD; or both the first multi-link device and the second multi-link device are non-AP MLDs; or both the first multi-link device and the second multi-link device are AP MLDs.

FIG. 2 is a schematic diagram of a structure of a multi-link device 200 according to an embodiment of this application. The multi-link device 200 may correspondingly implement functions or steps implemented by a first multi-link device or a second multi-link device in method embodiments of this application. For example, a multi-link communication link is established or updated, or a traffic identifier-to-link mapping relationship is established or updated. Specific functions or steps are described in detail below.

The multi-link device 200 may include a transceiver module 210 and a processing module 220. Optionally, the communication apparatus may further include a storage unit. The storage unit may be configured to store instructions (code or a program) and/or data. The transceiver module 210 and the processing module 220 may be coupled to the storage unit. For example, the processing module 220 may read instructions (code or a program) and/or data in the storage unit, to implement a corresponding method.

The processing module 220 may be implemented by a processor or a processor-related circuit component, and the transceiver module 210 may be implemented by a transceiver, a transceiver-related circuit component, or a communication interface.

The foregoing units may be disposed independently, or may be partially or completely integrated. For example, the transceiver module 210 may be integrated by a sending unit and a receiving unit.

The following describes several possible product forms of a multi-link device. It should be understood that the following descriptions are merely examples, and a product form of the multi-link device in embodiments of this application is not limited thereto.

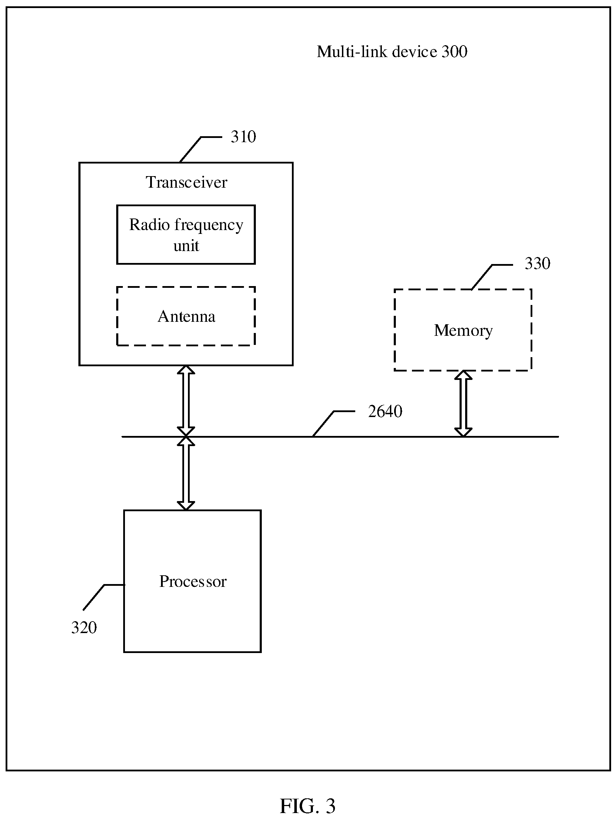

In a possible product form, the multi-link device in embodiments of this application may be implemented by using a general bus architecture. For example, FIG. 3 is a schematic diagram of a structure of a multi-link device 300 according to an embodiment of this application. The multi-link device 300 includes a transceiver 310 and a processor 320.

The transceiver 310 is configured to communicate with another device by using a transmission medium, so that an apparatus in the multi-link device 300 can communicate with the another device. For example, when the multi-link device 300 is a first multi-link device, the another device is a second multi-link device; or when the multi-link device 300 is a second multi-link device, the another device is a first multi-link device. The processor 320 may send and receive data by using the transceiver 310.

In a possible implementation, the transceiver 310 may be specifically a radio frequency unit. The radio frequency unit may be independent of the multi-link device 300, or may be integrated into the multi-link device 300.

In a possible implementation, the transceiver 310 may further include an antenna, for example, a remote antenna independent of the multi-link device 300, or may be an antenna integrated in the multi-link device 300. The multi-link device 300 includes at least one processor 320, configured to implement or support the multi-link device 300 in implementing a function of the first multi-link device or the first multi-link device in the methods provided in embodiments of this application. In FIG. 3, an antenna is represented by using a dashed box, which is optional for the multi-link device 300.

In embodiments of this application, the processor 320 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

Further, the multi-link device 300 may further include at least one memory 330, configured to store program instructions and/or data. The memory 330 is coupled to the processor 320. The coupling in this embodiment of this application may be an indirect coupling or a communication connection between apparatuses, units, or modules in an electrical form, a mechanical form, or another form, and is used for information exchange between the apparatuses, the units, or the modules. The processor 320 may cooperate with the memory 330. The processor 320 may execute the program instructions and/or the data stored in the memory 330, so that the multi-link device 300 implements a corresponding method. At least one of the at least one memory may be located in the processor. In FIG. 3, the memory is represented by using a dashed box, which is optional for the multi-link device 300.

In this embodiment of this application, the memory 330 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

It should be understood that a specific connection medium between the transceiver 310, the processor 320, and the memory 330 is not limited in this embodiment of this application. In this embodiment of this application, the memory 330, the processor 320, and the transceiver 310 are connected by using a bus 340 in FIG. 3. The bus is represented by using a bold line in FIG. 3. The foregoing is merely an example for description. A connection manner of other components is not limited thereto. The bus may be classified into an address bus, a data bus, a control bus, and the like. For ease of representation, only one thick line is used to represent the bus in FIG. 3, but this does not indicate that there is only one bus or only one type of bus.

As another possible product form, the multi-link device in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the multi-link devices in the foregoing product forms have any function of the first multi-link device or the second multi-link device in embodiments of this application. Details are not described herein again.

The following describes in detail technical solutions in embodiments of this application with reference to the accompanying drawings in embodiments of this application.

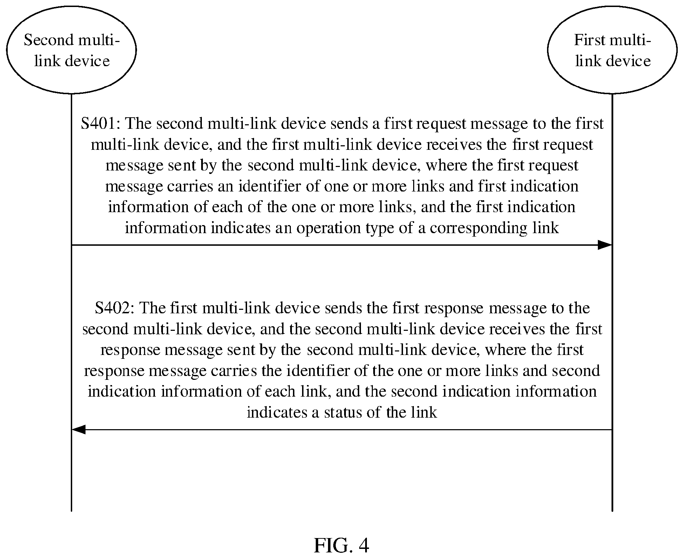

FIG. 4 is a flowchart of a multi-link communication method according to an embodiment of this application. The method may be applied to the communication system shown in FIG. 1. The method includes:

S401: A second multi-link device sends a first request message to a first multi-link device, and the first multi-link device receives the first request message sent by the second multi-link device, where the first request message carries an identifier of one or more links and first indication information of each of the one or more links, and the first indication information indicates an operation type of a corresponding link.

The first multi-link device may be an AP MLD, and the second multi-link device may be a non-AP MLD; or the second multi-link device may be an AP MLD, and the first multi-link device may be a non-AP MLD; or both the first multi-link device and the second multi-link device are non-AP MLDs.

In this embodiment of this application, the link operation type may include any one or more of the following: (1) establishing multi-link communication; (2) providing only link information or not establishing multi-link communication; (3) adding a link to a multi-link communication link; and (4) deleting a link from the multi-link communication link. It should be understood that the foregoing four operation types are merely examples rather than limitations, and another operation type is also applicable in actual application.

Providing only link information means that the first request message provides only the link information, and is not used for requesting to establish multi-link communication. In other words, in this specification, not establishing multi-link communication and providing only link information may be interchangeably used.

Each link has only one operation type, for example, any one of the foregoing four operation types.

If the first request message carries only an identifier and first indication information of one link, an operation type indicated by the first indication information may be any one of the foregoing four operation types.

If the first request message carries only identifiers of multiple links and first indication information, operation types of any two of the multiple links may be the same or may be different.

For example, if the first request message carries an identifier and first indication information of a first link, and an identifier and first indication information of a second link, an operation type indicated by the first indication information of the first link and an operation type indicated by the first indication information of the second link may be any one of the following a to f:
a. The operation type indicated by the first indication information of the first link is establishing multi-link communication, and the operation type indicated by the first indication information of the second link is not establishing multi-link communication and providing only link information.
b. The operation type indicated by the first indication information of the first link is adding a link to a multi-link communication link, and the operation type indicated by the first indication information of the second link is not establishing multi-link communication and providing only link information.
c. The operation type indicated by the first indication information of the first link is deleting a link from a multi-link communication link, and the operation type indicated by the first indication information of the second link is not establishing multi-link communication and providing only link information.
d. The operation type indicated by the first indication information of the first link is establishing multi-link communication, and the operation type indicated by the first indication information of the second link is adding a link to a multi-link communication link.
e. The operation type indicated by the first indication information of the first link is establishing multi-link communication, and the operation type indicated by the first indication information of the second link is deleting a link from a multi-link communication link.
f. The operation type indicated by the first indication information of the first link is adding a link to a multi-link communication link, and the operation type indicated by the first indication information of the second link is deleting a link from the multi-link communication link.

The two links are used as an example above. In actual application, the first request message may further include an identifier and first indication information of another link, such as a third link and a fourth link. Operation types corresponding to the third link and the fourth link may be the same as or different from the operation type of the first link or the second link, and details are not described herein again.

Optionally, the first request message may further include capability information of a station on each link or other parameter information of each link. This is not limited in this embodiment of this application.

After receiving the first request message, the first multi-link device performs, for a link indicated by each identifier carried in the first request message, a corresponding operation on the link based on an operation type indicated by first indication information corresponding to the link.

Optionally, for a link whose operation type is providing only link information or not establishing multi-link communication, no operation may be performed. Alternatively, for a link whose operation type is providing only link information or not establishing multi-link communication, an operation such as link establishment, link deletion, or link addition may not be performed, but another operation may be performed on the link, for example, saving link information or changing link information. This is not limited herein.

After corresponding operations are performed on all links (excluding the link whose operation type is providing only the link information or not establishing multi-link communication) indicated by all identifiers carried in the first request message, a first response message may be generated based on a status of each link. Then, S402 is performed.

S402: The first multi-link device sends the first response message to the second multi-link device, and the second multi-link device receives the first response message sent by the second multi-link device, where the first response message carries the identifiers of the one or more links and second indication information of each link, and the second indication information indicates a status of the link.

Specifically, the status of each link is corresponding to an operation type indicated by first indication information corresponding to the link.

The first link is used as an example, and a status of the first link may be any one of the following:
(1) The status of the first link is that the multi-link communication is successfully established, or the multi-link communication fails to be established. The status is used as a response to the operation type that is of establishing multi-link communication and that is of the first link.
(2) The status of the first link is that only the link information is provided or the multi-link communication is not established, and the status is used as a response to the operation type that is of providing only the link information or not establishing multi-link communication and that is of the first link.
(3) The status of the first link is that the link is successfully added, or the link fails to be added. The status is used as a response to the operation type that is of adding the link to the multi-link communication link and that is of the first link.
(4) The status of the first link is that the link is successfully deleted, or the link fails to be deleted. The status is used as a response to the operation type that is of deleting the link from the multi-link communication link and that is of the first link.

It should be understood that each link has only one type of status. If the first response message carries identifiers and second indication information of multiple links, statuses of any two of the multiple links may be the same or different.

Certainly, the foregoing several statuses are merely examples rather than limitations, and another operation type is also applicable in actual application.

It should be noted that, before the second multi-link device sends the first request message to the first multi-link device, it is assumed that no multi-link communication link is established between the first multi-link device and the second multi-link device, for example, S401 to S402 are methods executed by the first multi-link device and the second multi-link device in a multi-link establishment phase. In this case, the operation type indicated by the first indication information carried in the first request message may be establishing multi-link communication, providing only link information, or not establishing multi-link communication, and is not adding a link to a multi-link communication link or deleting a link from the multi-link communication link. Only when the first multi-link device and the second multi-link device have established a multi-link communication link before the second multi-link device sends the first request message to the first multi-link device, for example, S401 to S402 are methods executed by the first multi-link device and the second multi-link device in a link reassociation phase, the operation type of the first indication information carried in the first request message may be adding a link to the multi-link communication link or deleting a link from the multi-link communication link.

The following describes in detail specific implementations of the first link device and the second multi-link device in the multi-link establishment phase.

Specifically, an example in which the first multi-link device is the AP MLD and the second multi-link device is the non-AP MLD is used. Before the non-AP MLD communicates with the AP MLD, multi-link establishment needs to be performed. The non-AP MLD may send an association request frame (the first request message) to the AP MLD. After receiving the association request frame, the AP MLD sends an association response frame (the first response message) to the non-AP MLD, to implement multi-link establishment.

Optionally, information such as an identifier and first indication information of each link in the association request frame, or information such as an identifier and second indication information of each link in the association response frame may be carried in a multi-link information element (multi-link element, ML element) (where the multi-link information element may also be referred to as a multi-link element).

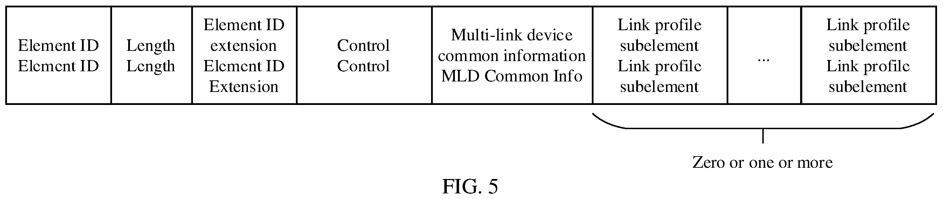

FIG. 5 is a schematic diagram of a multi-link information element according to an embodiment of this application. As shown in FIG. 5, the multi-link information element includes a control (Control) field, a multi-link device common information (MLD common Info) field, and zero or one or more link profile subelements (Link profile subelement) (or referred to as a link information field).

The multi-link device common information field carries common information of an MLD on all links, for example, a media access control (Media Access Control, MAC) address (address) of the MLD. Dedicated information of each link, for example, capability information of a station of the MLD on each link, operation type information (namely, first indication information) of the link or status information (namely, second indication information) of the link, and other link-related parameter information is carried in a link profile subelement.

The non-AP MLD and the AP MLD may exchange information about multiple links by including ML elements in the association request frame and the association response frame, to complete multi-link establishment. Then, communication may be performed on these links.

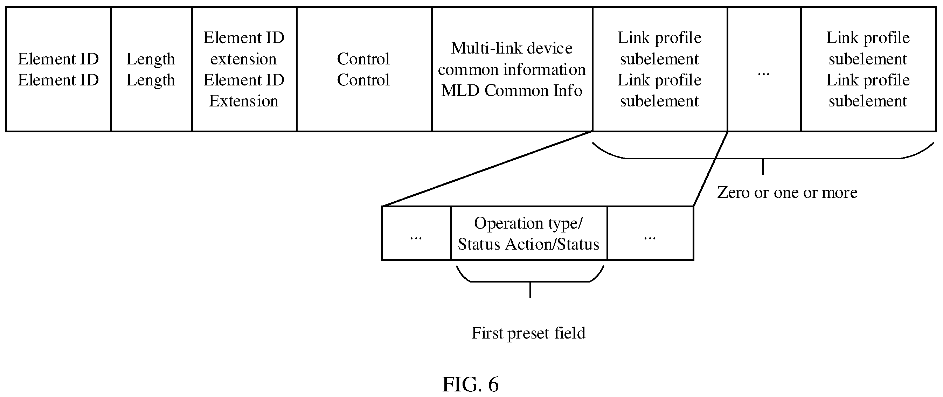

Optionally, the first indication information and/or the second indication information are/is carried in a first preset field in the multi-link information element, and the first preset field is located in a link profile subelement, as shown in FIG. 6.

In a possible design, when the multi-link information element is located in the association request frame and the association response frame, values of the first preset field may each indicate a different meaning. In other words, the meaning indicated by the value of the first preset field needs to be determined based on a frame type (including the association request frame and the association response frame) in which the first preset field is located and based on the value of the first preset field.

For example, Table 1 is an example of possible values of the first preset field (namely, an operation type (Action)) in the multi-link information element carried in the association request frame and meanings of the values. Table 2 is an example of possible values of the first preset field (namely, a status (Status)) in the multi-link information element carried in the association response frame and meanings of the values.

**Table 1 Association request frame**

| First preset field (First field) | Meaning |
|---|---|
| First value | Request multi-link establishment |
| Second value | Provide only link information or not establish multi-link communication |

For ease of differentiation, the first preset field in the multi-link information element carried in the association request frame is referred to as the first field herein.

It should be noted that Table 1 lists two possible values of the first field, but this does not mean that the first field needs to include the two values. In actual application, the value of the first field may be only a part of the values in Table 1, or may further include a value other than the values listed in Table 1.

**Table 2 Association response frame**

| First preset field (Second field) | Meaning |
|---|---|
| First value | Multi-link communication is successfully established. |
| Second value | Multi-link communication fails to be established. |
| Third value | Only link information is provided or multi-link communication is not established. |

For ease of differentiation, the first preset field in the multi-link information element carried in the association response frame is referred to as the second field herein.

It should be noted that the foregoing Table 2 lists three possible values of the second field, but this does not mean that the second field needs to include the three values. In actual application, the value of the second field may be only a part of the values in Table 2, or may further include a value other than the values listed in Table 2.

In another possible design, when the multi-link information element is located in the association request frame and the association response frame, a value of the first preset field may indicate a same meaning. In other words, the meaning indicated by the value of the first preset field may be directly determined based on the value of the first preset field.

For example, Table 3 is an example of possible values of the first preset field in the multi-link information element carried in the association request frame or the association response frame and meanings of the values.

**Table 3 Association request frame or association response frame**

| First preset field (Third field) | Meaning |
|---|---|
| First value | An operation type is establishing multi-link communication. |
| Second value | A status is that multi-link communication is successfully established. |
| Third value | A status is that multi-link communication fails to be established. |
| Fourth value | An operation type or a status is that only link information is provided or multi-link communication is not established. |

For ease of differentiation, the first preset fields in the multi-link information elements carried in the association request frame and the association response frame are collectively referred to as the third field herein (the third field is a status when carried in the association response frame, and is an action when carried in the association request frame).

In Table 3, the fourth value is used in both the association request frame and the association response frame to indicate that only the link information is provided or the multi-link communication is not established. During specific implementation, different values may be used in the association request frame and the association response frame to indicate that only link information is provided or multi-link communication is not established. For example, the fourth value of the first preset field indicates that the operation type is that only the link information is provided or the multi-link communication is not established, and a fifth value of the first preset field indicates that the status is that only the link information is provided or the multi-link communication is not established.

It should be noted that the foregoing Table 3 lists four possible values of the third field, but this does not mean that the third field needs to include the four values. In actual application, the value of the third field may be only a part of the values in Table 3, or may further include a value other than the values listed in Table 3.

In addition to multi-link establishment, the multi-link device may further need to add or delete one or more links in a communication process, which may be implemented by sending a reassociation request frame and response frame.

The following describes in detail specific implementations of the first link device and the second multi-link device in the link reassociation phase.

Specifically, the first multi-link device may send a reassociation request frame (the first request message) to the second multi-link device, and after receiving the association request frame, the second multi-link device sends a reassociation response frame (the second response message) to the second multi-link device, to implement link reassociation.

Optionally, information such as an identifier and first indication information of each link in the reassociation request frame, or information such as an identifier and second indication information of each link in the reassociation response frame may be carried in a multi-link information element (multi-link element, ML element) (where the multi-link information element may also be referred to as a multi-link element).

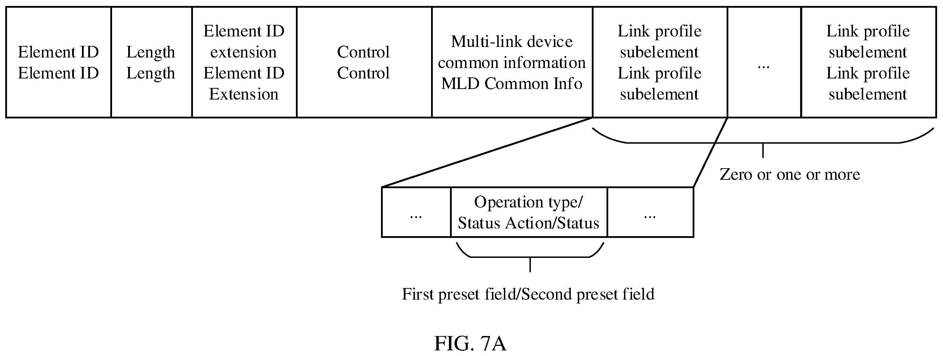

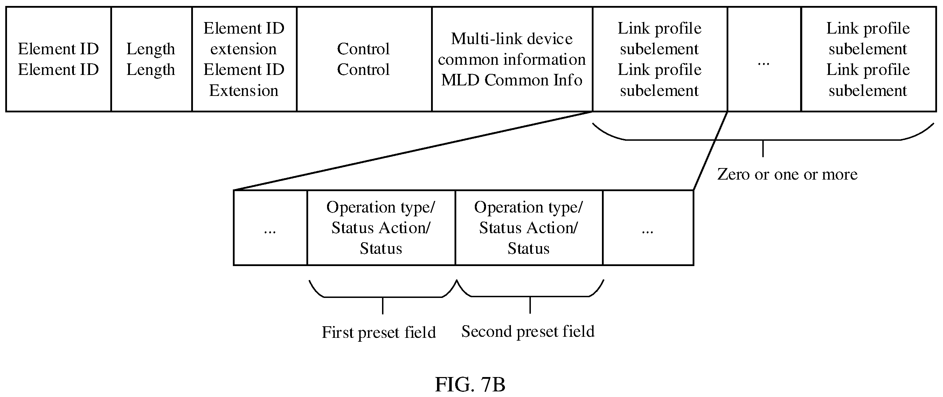

Optionally, the first indication information and/or the second indication information are/is carried in a second preset field in the multi-link information element, and the second preset field is located in a link profile subelement. The second preset field herein and the foregoing first preset field may be a same field, as shown in FIG. 7A, or may be different fields, as shown in FIG. 7B. This is not limited in this embodiment of this application.

The following uses an example in which the second preset field and the first preset field are the same field.

In a possible design, when the multi-link information element is located in the reassociation request frame and the reassociation response frame, values of the first preset field may each indicate a different meaning. In other words, the meaning indicated by the value of the first preset field needs to be determined based on a frame type (including the reassociation request frame and the reassociation response frame) in which the first preset field is located and based on the value of the first preset field.

For example, Table 4 is an example of possible values of the first preset field (operation type (Action)) in the multi-link information element carried in the reassociation request frame and meanings of the values. Table 5 is an example of possible values of the first preset field (status (Status)) in the multi-link information element carried in the reassociation response frame and meanings of the values.

**Table 4 Reassociation request frame**

| First preset field (Fourth field) | Meaning |
|---|---|
| First value | Request to add a link |
| Second value | Request to delete a link |
| Third value | Provide only link information |

For ease of differentiation, the first preset field in the multi-link information element carried in the reassociation request frame is referred to as the fourth field herein.

It should be noted that the foregoing Table 4 lists three possible values of the fourth field, but this does not mean that the fourth field needs to include the three values. In actual application, the value of the fourth field may be only a part of the values in Table 4, or may further include a value other than the values listed in Table 4.

Optionally, when a specific link profile subelement in the multi-link element carried in the reassociation request frame is used for deleting a link, the link profile subelement may include only an identifier of the link and an operation type of the link, or the link profile subelement may not carry information other than the identifier of the link and the operation type, for example, does not need to carry capability information of a station working on the link, to reduce resources.

**Table 5 Reassociation response frame**

| Fifth field | Meaning |
|---|---|
| First value | A link is successfully added. |
| Second value | A link fails to be added. |
| Third value | A link is successfully deleted. |
| Fourth value | A link fails to be deleted. |
| Fifth value | Only link information is provided. |

For ease of differentiation, the first preset field in the multi-link information element carried in the reassociation response frame is referred to as the fifth field herein.

It should be noted that the foregoing Table 5 lists five possible values of the fifth field, but this does not mean that the fifth field needs to include the five values. In actual application, the value of the fifth field may be only a part of the values in Table 5, or may further include a value other than the values listed in Table 5.

In another possible design, when the multi-link information element is located in the reassociation request frame and the reassociation response frame, a value of the first preset field may indicate a same meaning. In other words, the meaning indicated by the value of the first preset field may be directly determined based on the value of the first preset field.

For example, Table 6 is an example of possible values of the first preset field in the multi-link information element carried in the reassociation request frame or the reassociation response frame and meanings of the values.

**Table 6 Reassociation request frame or reassociation response frame**

| First preset field (Sixth field) | Meaning |
|---|---|
| First value | An operation type is requesting to add a link. |
| Second value | An operation type is requesting to delete a link. |
| Third value | A status is that a link is successfully added. |
| Fourth value | A status is that a link fails to be added. |
| Fifth value | A status is that a link is successfully deleted. |
| Sixth value | A status is that a link fails to be deleted. |
| Seventh value | Only link information is provided. |

For ease of differentiation, the first preset field in the multi-link information element carried in the reassociation request frame or the reassociation response frame are collectively referred to as the sixth field herein.

In Table 6, the seventh value is used in both the reassociation request frame and the reassociation response frame to indicate that only link information is provided. During specific implementation, different values may be used in the reassociation request frame and the reassociation response frame to indicate that only link information is provided or multi-link communication is not established. For example, the seventh value of the first preset field indicates that the operation type is that only the link information is provided or the multi-link communication is not established, and an eighth value of the first preset field indicates that the status is that only the link information is provided or the multi-link communication is not established.

It should be noted that the foregoing Table 6 lists seven possible values of the sixth field, but this does not mean that the sixth field needs to include the seven values. In actual application, the value of the sixth field may be only a part of the values in Table 6, or may further include a value other than the values listed in Table 6.

In another possible design, the first field, the second field, the fourth field, and the fifth field may be combined into one field, for example, a seventh field. In other words, when the multi-link information element is located in the association request frame, the association response frame, the reassociation request frame, and the reassociation response frame, a value of the first preset field may indicate a same meaning.

For example, Table 7 is an example of possible values of the first preset field in the multi-link information element carried in the association request frame, the association response frame, the reassociation request frame, or the reassociation response frame, and meanings of the values.

**Table 7 Association request frame, association response frame, reassociation request frame, or reassociation response frame**

| First preset field (Seventh field) | Meaning |
|---|---|
| First value | Multi-link establishment is requested. |
| Second value | Multi-link communication is successfully established. |
| Third value | Multi-link communication fails to be established. |
| Fourth value | Only link information is provided. |
| Fifth value | A link is requested to be added. |
| Sixth value | A link is requested to be deleted. |
| Seventh value | A link is successfully added. |
| Eighth value | A link fails to be added. |
| Ninth value | A link is successfully deleted. |

For ease of differentiation, the first preset field in the multi-link information element carried in the association request frame, the association response frame, the reassociation request frame, or the reassociation response frame is collectively referred to as the seventh field herein.

In Table 7, the fourth value is used in both the request frame and the response frame to indicate that only the link information is provided. During specific implementation, different values may be used in the request frame and the response frame to indicate that only link information is provided. For example, the fourth value of the first preset field indicates that the operation type is that only the link information is provided or the multi-link communication is not established, and a tenth value of the first preset field indicates that the status is that only the link information is provided.

It should be noted that the foregoing Table 7 lists nine possible values of the seventh field, but this does not mean that the seventh field needs to include the nine values. In an actual application, the value of the seventh field may be only a part of the values in Table 7, or may further include a value other than the values listed in Table 7.

In this embodiment of this application, for the AP MLD, not all links may be started at the beginning. Therefore, a new link may be present (or used or enabled) in a communication process. When the AP MLD starts a new link, the AP MLD may carry information about the new link in a multi-link information element, for example, in a new link profile subelement.

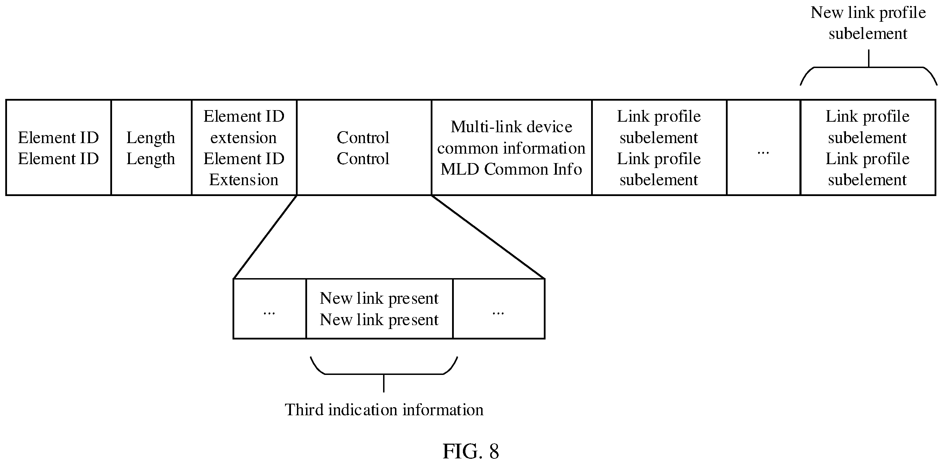

Optionally, as shown in FIG. 8, an MLD common information field in the multi-link information element may carry third indication information, indicating that the multi-link element carries information about a new link.

Optionally, when the AP MLD starts (or uses or enables) a new link, information about the new link may be carried in each beacon frame of N consecutive beacon frames, where N is a positive integer, to ensure that the information about the new link can be effectively received by the non-AP MLD. This improves system reliability. A value of N is set and broadcast by an AP, or is specified in a standard. This is not limited in this embodiment of this application. Optionally, the value of N may be any value in a range [1, 10], for example, 2, 3, 4, or 5.

It can be learned from the foregoing that, in this embodiment of this application, the first indication information is carried in the first request message (the association request frame or the reassociation request frame), and the second indication information is carried in the first response message (the association response frame or the reassociation response frame). In this way, during multi-link establishment, an MLD establishes multi-link communication on a part of or all links supported by the MLD, and may further add a link to or delete a link from an established multi-link communication link based on a communication requirement in subsequent communication. In addition, a new link may be started. This improves flexibility of multi-link communication performed by the MLD from multiple aspects, and can well meet a requirement of dynamically updating the communication link by the MLD.

To further improve multi-link communication performance and better manage traffic, in embodiments of this application, a traffic-to-link mapping solution is further provided, to provide different services for different traffic. For example, unimportant traffic is mapped to a part of links, and important traffic is mapped to all links. Alternatively, different traffic is mapped to corresponding links based on rate and latency characteristics of different links.

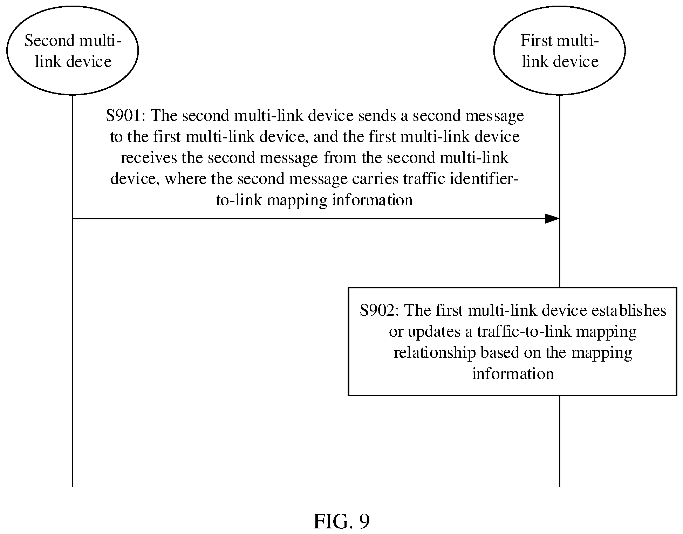

FIG. 9 is a flowchart of a traffic-to-link mapping method according to an embodiment of this application. The method may be applied to the communication system shown in FIG. 1. The method includes:
S901: A second multi-link device sends a second message to a first multi-link device, and the first multi-link device receives the second message from the second multi-link device, where the second message carries traffic identifier-to-link mapping information.

The second multi-link device may send the second message to the first multi-link device in a broadcast mode (in other words, the second message is a broadcast message), or may send the second message to the first multi-link device in a multicast mode (in other words, the second message is a multicast message), or may send the second message to the first multi-link device in a unicast mode (in other words, the second message is a unicast message). This is not limited in this embodiment of this application.

When the second link may send the second message to the first multi-link device in the unicast mode, the first multi-link device may be an AP MLD, and the second multi-link device may be a non-AP MLD; or the second multi-link device may be an AP MLD, and the first multi-link device may be a non-AP MLD; or both the first multi-link device and the second multi-link device are non-AP MLDs.

When the second link may send the second message to the first multi-link device in the broadcast or multicast mode, the second multi-link device may be an AP MLD, and the first multi-link device may be a non-AP MLD.

Optionally, in a unicast mode, before the second multi-link device sends the second message to the first multi-link device, the second multi-link device further receives a third message from the first multi-link device, where the third message is used for requesting to establish or update a traffic identifier-to-link mapping relationship. In other words, the second message is a response message for the third message.

Optionally, in the unicast mode, the second message may further carry fourth indication information, and the fourth indication information indicates a second mode used for negotiating a traffic identifier-to-link mapping. Before the first multi-link device receives second message from a second multi-link device, the first multi-link device further sends a third message to the second multi-link device, where the third message carries fifth indication information, and the fifth indication information indicates a first mode used for negotiating a traffic identifier-to-link mapping.

The first mode may be: a traffic-to-link mapping is requested to be established, but a specific traffic-to-link mapping method of a requester (namely, the first multi-link device) is not carried; a traffic-to-link mapping is requested to be established, a suggested mapping method is carried, and a responder (namely, the second multi-link device) is allowed to modify a mapping relationship in a response frame; or a traffic-to-link mapping is requested to be established, a demanded mapping method is carried, and a responder is not allowed to modify a mapping relationship in a response frame.

The second mode may be: the traffic-to-link mapping is successfully established, and a final mapping method is carried; the traffic-to-link mapping is not successfully established, and the suggested mapping method is carried; the traffic-to-link mapping is not successfully established, the demanded mapping method is carried, and if a requester sends a request again, the mapping can be successfully established only by using the mapping method; or the traffic-to-link mapping fails to be established.

Optionally, in the broadcast mode, the second message may further carry sixth indication information, indicating that the second message carries broadcast traffic-to-link mapping information.

Optionally, in the broadcast mode, before the first multi-link device receives the second message from the second multi-link device, the first multi-link device may further send a fourth message to the second multi-link device, where the fourth message carries seventh indication information, and the seventh indication information indicates that the first multi-link device supports broadcast traffic-to-link mapping information.

Optionally, in the broadcast mode, the second message further carries eighth indication information, indicating an accumulative quantity of updates of traffic-to-link mapping information, so that after receiving the second message, a multi-link device that wakes up after sleep learns an update status of the traffic-to-link mapping information, and determines whether the multi-link device needs to update the traffic-to-link mapping relationship.

In a possible design, the traffic-to-link mapping information may be carried in a header (Header) field of MAC.

Specifically, a new control type is defined by using an A-control subfield (A-Control subfield) in the MAC header, to carry traffic identifier-to-link mapping information.

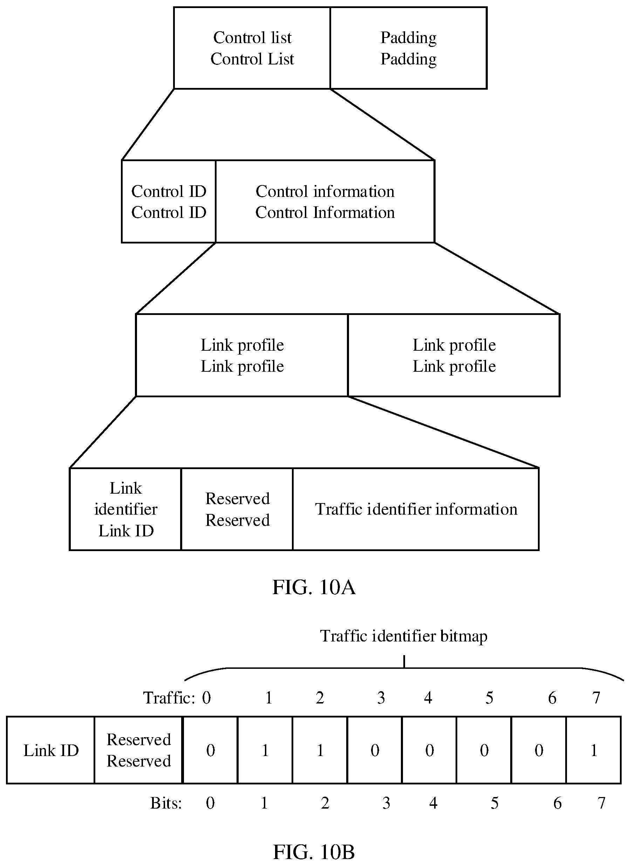

Example 1: FIG. 10A is a schematic diagram of a possible MAC header according to an embodiment of this application. The MAC header carries a control (control) ID and control information (control information) corresponding to the control ID. The control information field includes two link profile (link profile) fields. Each link profile includes one piece of link identifier information (link ID) and identifier information of traffic mapped to the link.

The identifier information of the traffic may be a traffic identifier (Traffic ID, TID) bitmap (bitmap), or may be a starting traffic identifier (starting TID) and an ending traffic identifier (ending TID). A TID that falls between the starting TID and the ending TID is mapped to the link. Alternatively, the identifier information is in another form. This is not limited in this embodiment of this application.

Each bit in the traffic identifier bitmap corresponds to one traffic identifier, different bits correspond to different traffic identifiers, and each traffic identifier represents a specific type of traffic. For example, a bit i corresponds to a traffic identifier i, a value of i starts from 0, and a maximum value is a quantity of bits in the traffic identifier bitmap minus 1. The quantity of bits in the traffic identifier bitmap may be 4, 8, 12, 16, or the like. A specific quantity of bits may be determined based on a quantity of bits configured in the control information. This is not limited in this application.

FIG. 10B is a schematic diagram of a possible traffic identifier bitmap according to an embodiment of this application. The traffic identifier bitmap includes 8 bits. A first bit (bit 0) corresponds to traffic whose TID is 0, a second bit (bit 1) corresponds to traffic whose TID is 1, a third bit (bit 2) corresponds to traffic whose TID is 3, a fourth bit (bit 3) corresponds to traffic whose TID is 4, a fifth bit (bit 4) corresponds to traffic whose TID is 4, a sixth bit (bit 5) corresponds to traffic whose TID is 5, a seventh bit (bit 6) corresponds to traffic whose TID is 6, and an eighth bit (bit 7) corresponds to traffic whose TID is 7. Traffic whose corresponding field value is 1 is mapped to a link, or traffic whose corresponding field value is 0 is mapped to the link. For example, the traffic whose corresponding field value is 1 is mapped to the link. In this case, the traffic identifier bitmap shown in FIG. 10B indicates that traffic 1, traffic 2, and traffic 7 are mapped to a link corresponding to the link profile field.

Optionally, when only one link profile needs to be carried, a special link ID may be carried in another link profile to indicate that information in the current link profile is invalid information.

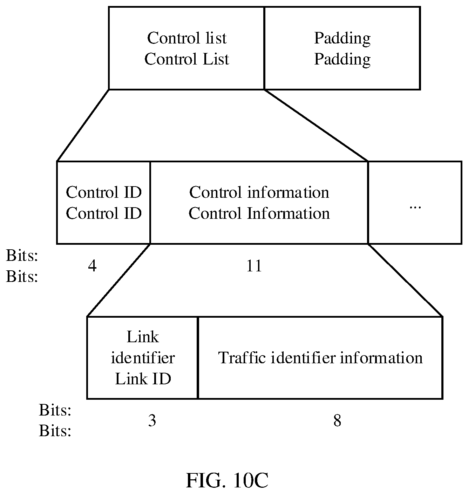

Example 2: FIG. 10C is a schematic diagram of another possible MAC header according to an embodiment of this application. A control information (control information) field corresponding to each control (control) ID includes a link profile (link profile) field. Each link profile includes one piece of link identifier information (link ID) and identifier information of traffic mapped to the link. The second multi-link device may include a link profile of one or more links in the MAC header based on an actual traffic-to-link mapping requirement.

Similarly, identifier information of traffic in the link profile in Example 2 may be a traffic identifier bitmap, a starting traffic identifier and an ending traffic identifier, or in another form. This is not limited in this embodiment of this application. For a case in which the identifier information of the traffic is the traffic identifier bitmap, refer to FIG. 10B. Details are not described herein again.

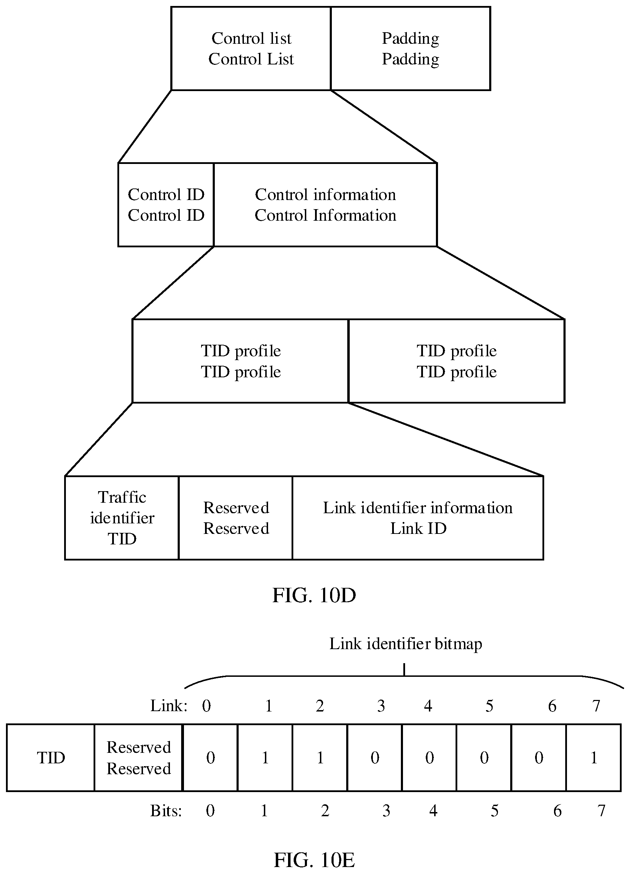

Example 3: FIG. 10D is a schematic diagram of another possible MAC header according to an embodiment of this application. The MAC header carries a traffic identifier (TID) ID and control information (control information) corresponding to the TID ID. The control information field includes two traffic profile (TID profile) fields. Each TID profile includes one piece of traffic identifier information (TID ID) identifier information of a link to which the traffic is mapped.

The identifier information of the link may be a link identifier bitmap (link ID bitmap), or may be a starting link identifier (starting link ID) and an ending link identifier (ending link ID). The traffic is mapped to a link corresponding to a link ID that falls between the starting link ID and the ending link ID. Alternatively, the identifier information of the link may be in another form. This is not limited in this embodiment of this application.

Each bit in the link identifier bitmap corresponds to one link identifier, and different bits correspond to different link identifiers. For example, a bit i corresponds to a link identifier i, a value of i starts from 0, and a maximum value is a quantity of bits in the link identifier bitmap minus 1. The quantity of bits in the link identifier bitmap may be 4, 8, 12, 16, or the like. A specific quantity of bits may be determined based on a quantity of bits configured in the control information. This is not limited in this application.

FIG. 10E is a schematic diagram of a possible link identifier bitmap according to an embodiment of this application. The link identifier bitmap includes 8 bits. A first bit (bit 0) corresponds to a link whose link ID is 0, a second bit (bit 1) corresponds to a link whose link ID is 1, a third bit (bit 2) corresponds to a link whose link ID is 3, a fourth bit (bit 3) corresponds to a link whose link ID is 4, a fifth bit (bit 4) corresponds to a link whose link ID is 4, a sixth bit (bit 5) corresponds to a link whose link ID is 5, a seventh bit (bit 6) corresponds to a link whose link ID is 6, and an eighth bit (bit 7) corresponds to a link whose link ID is 7. The traffic is mapped to a link whose corresponding field value is 1, or the traffic is mapped to a link whose corresponding field value is 0. For example, the traffic is mapped to the link whose corresponding field value is 1. In this case, the link identifier bitmap shown in FIG. 10E indicates that the traffic is mapped to links 1, 2, and 7.

Optionally, when only one TID profile needs to be carried, a special TID ID may be carried in another TID profile to indicate that information in the TID profile is invalid information.

Certainly, FIG. 10E is merely an example rather than a limitation. For example, in an actual case, the quantity of bits in the link identifier bitmap may alternatively be another value, for example, 4, 12, or 16, and may be specifically determined based on a quantity of bits configured in the control information.

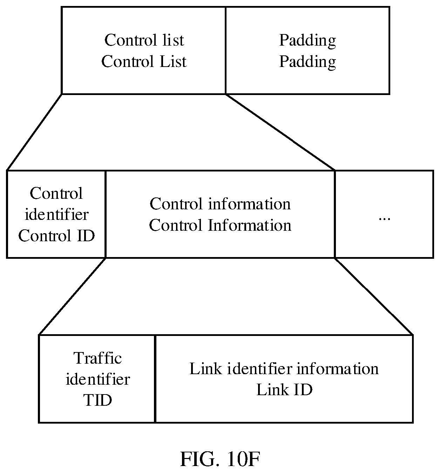

Example 4: FIG. 10F is a schematic diagram of another possible MAC header according to an embodiment of this application. A control information (control information) field corresponding to each control (control) ID includes a traffic profile (TID profile) field. Each TID profile includes one piece of traffic identifier information (TID) information about a link to which the traffic is mapped. The second multi-link device may include a TID profile of one or more pieces of traffic in the MAC header based on an actual traffic-to-link mapping requirement.

Similarly, identifier information of a link in the TID profile in Example 4 may be a link identifier bitmap, a starting link identifier and an ending link identifier, or in another form. This is not limited in this embodiment of this application. For a case in which the identifier information of the link is the link identifier bitmap, refer to FIG. 10E. Details are not described herein again.

In another possible design, the traffic identifier-to-link mapping information is carried in an information element indicating the traffic identifier-to-link mapping relationship.

In this embodiment of this application, a name of the information element indicating the traffic identifier-to-link mapping relationship is not limited. For example, the name may be a traffic identifier-to-link mapping information element (TID-to-Link Mapping element) (or referred to as a traffic identifier-to-link mapping element). For ease of description, the following uses the traffic identifier-to-link mapping information element as an example.

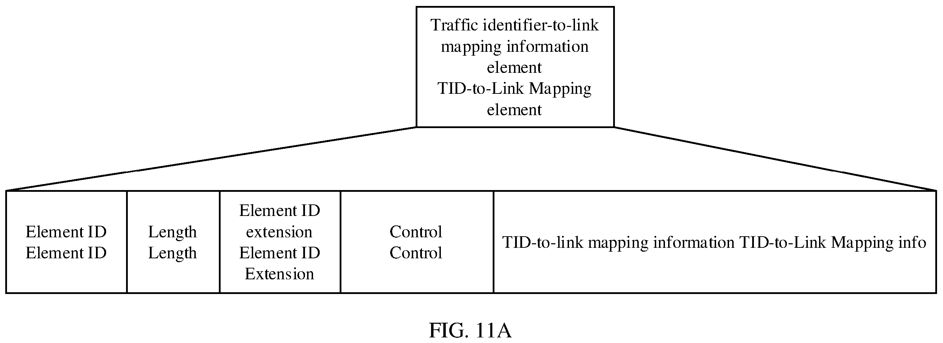

FIG. 11A is a schematic diagram of a traffic identifier-to-link mapping information element according to an embodiment of this application. The traffic identifier-to-link mapping information element includes a control (Control) field and a traffic identifier-to-link mapping information (TID-to-Link Mapping info) field. The TID-to-Link Mapping info field carries traffic identifier-to-link mapping information. It should be understood that the traffic identifier-to-link mapping information (TID-to-Link Mapping info) field may alternatively have another name. This is not limited in this embodiment of this application. Optionally, the traffic identifier-to-link mapping information element may further include fields such as an element identifier (Element ID) field, a length (Length) field, or an element ID extension (Element ID Extension) field, which is not limited herein.

There may be multiple specific implementations of the traffic identifier-to-link mapping information field. The following uses several possible examples.

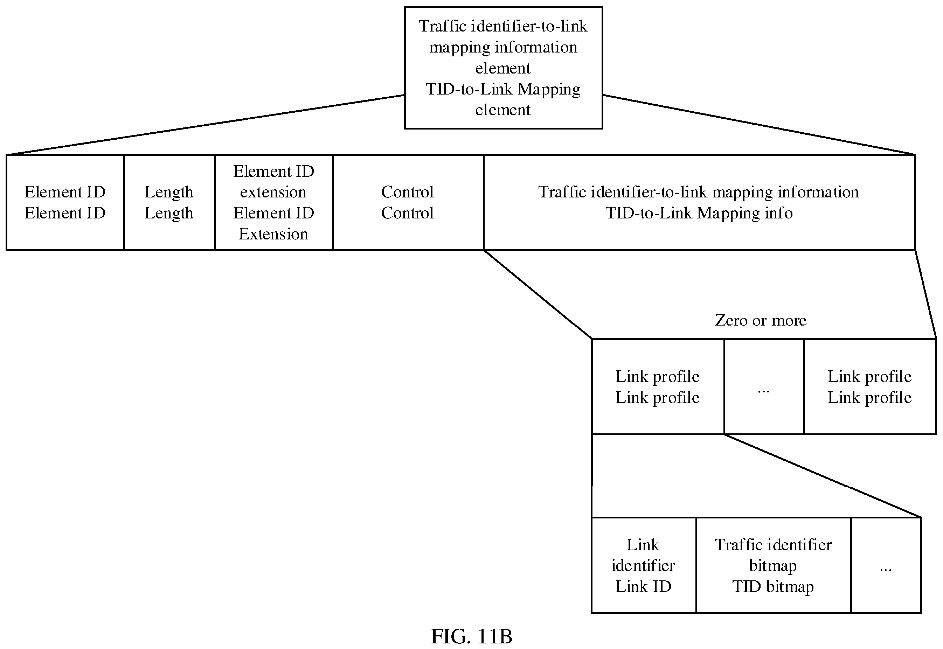

Example 1: As shown in FIG. 11B, the traffic identifier-to-link mapping information field includes one or more link profile (Link profile) fields, and each link profile field includes identifier information of one link and identifier information of one or more pieces of traffic mapped to the link. The identifier information of the traffic may be a traffic identifier bitmap (TID bitmap), or may be a starting traffic identifier (starting TID) and an ending traffic identifier (ending TID). A TID that falls between the starting TID and the ending TID is mapped to the link. Alternatively, the identifier information may be in another form. This is not limited in this embodiment of this application. In FIG. 11B, an example in which the identifier information of the traffic is a traffic identifier bitmap is used as an example. For a specific implementation of the traffic identifier bitmap, refer to FIG. 10B. Details are not described herein again.

Optionally, when the TID bitmap in the link profile field is all 0s, it may indicate that the link is disabled.

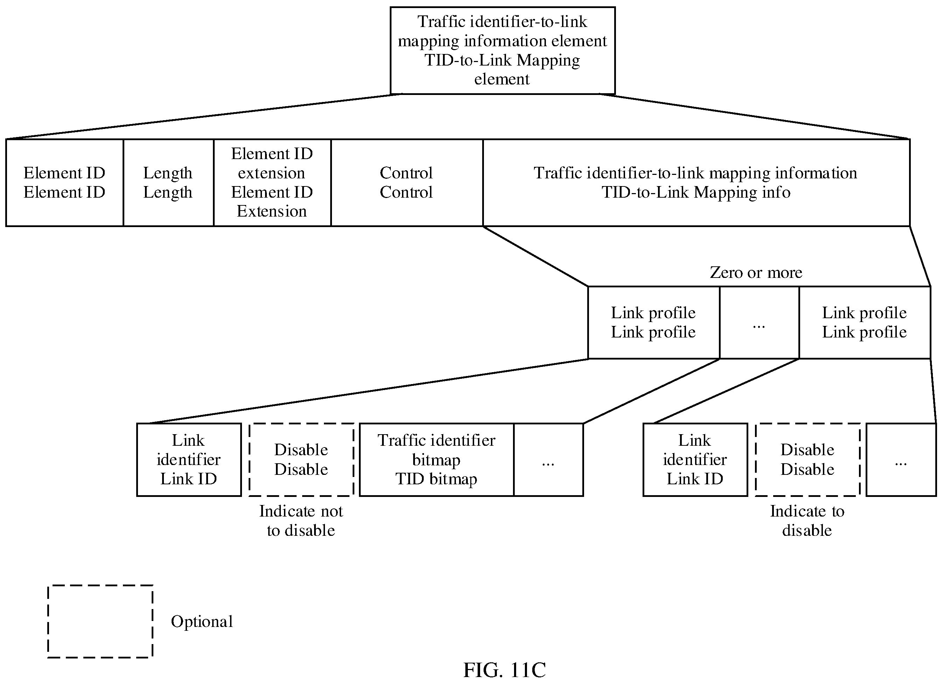

Optionally, as shown in FIG. 11C, a link profile field may further include a field indicating whether to disable a corresponding link, for example, a disable (Disable) field (or another name, which is not limited in this application). Further, if the disable field indicates that the link is disabled, the link profile field may not carry identifier information of traffic mapped to the link (in FIG. 11C, a traffic identifier bitmap is used as an example), or the link profile field carries only a link identifier and the disable field, or the TID bitmap is all 0s.

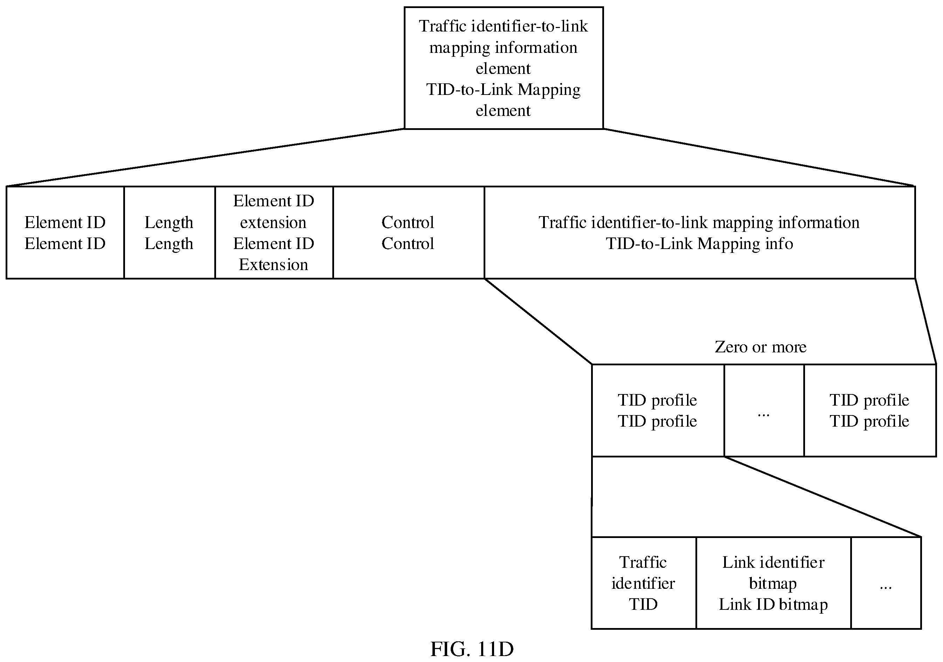

Example 2: As shown in FIG. 11D, a traffic identifier-to-link mapping information field includes one or more traffic profile fields, and each traffic profile field includes identifier information of one traffic and identifier information of one or more links to which the traffic is mapped. The identifier information of the link may be a link identifier bitmap (link ID bitmap), or may be a starting link identifier (starting link ID) and an ending link identifier (ending link ID). The traffic is mapped to a link corresponding to a link ID that falls between the starting link ID and the ending link ID. Alternatively, the identifier information of the link may be a link identifier list (link ID list). Alternatively, the identifier information of the link may be in another form. This is not limited in this embodiment of this application. In FIG. 11D, an example in which the identifier information of the link is the link identifier bitmap is used. For a specific implementation of the link identifier bitmap, refer to FIG. 10E. Details are not described herein again.

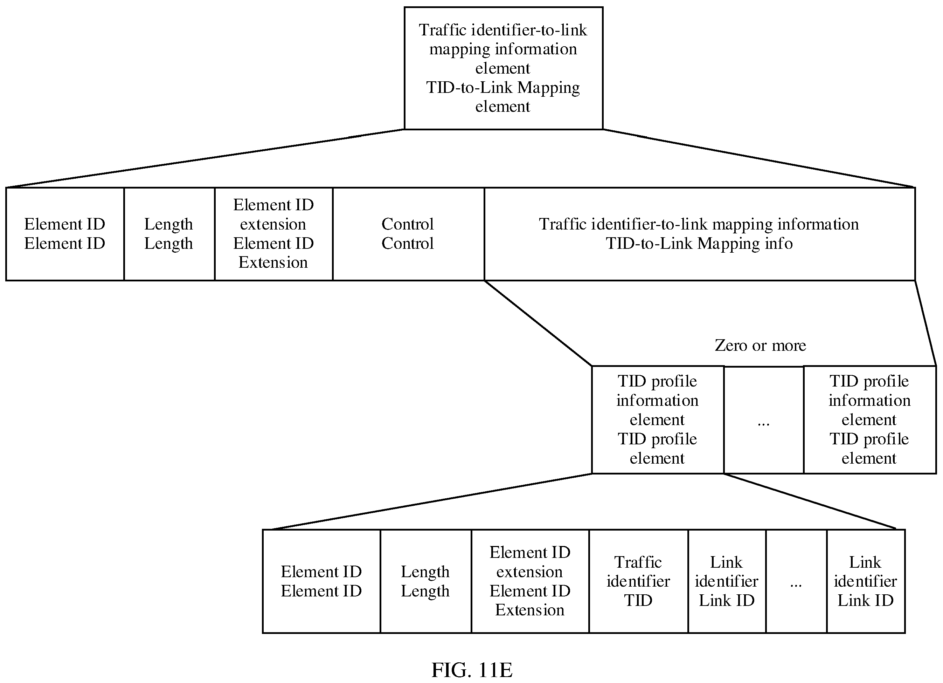

Optionally, the traffic profile field may alternatively exist in a form of an information element. In this case, the traffic profile field may further include fields such as an element identifier (element ID) field, a length (Length) field, and an element ID extension field (element ID Extension field), as shown in FIG. 11E.

Specific content of the control field may be different based on a manner of delivering the second message (or a type of the second message). The broadcast and unicast modes are described in the following.

### 1. Unicast mode

A request frame (the third message) and a response frame (the second message) may each carry a traffic identifier-to-link mapping information element.

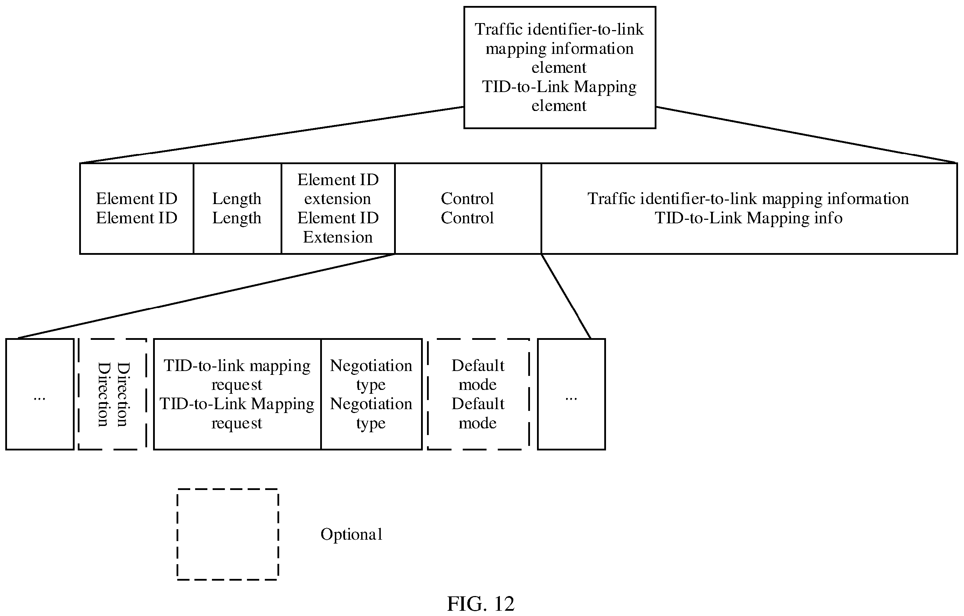

FIG. 12 is a schematic diagram of another possible traffic identifier-to-link mapping information element according to an embodiment of this application. As shown in FIG. 12, a control field includes a mapping request (TID-to-Link Mapping request) field, indicating a type of a frame in which a traffic identifier-to-link mapping information element is located. A length of the field may be 1 bit, where 1 indicates a request, and 0 indicates a response.

As shown in FIG. 12, the control field may further include a third preset field, for example, a negotiation type field (or a negotiation mode field, or another name, which is not limited herein), indicating a mode used for negotiating a traffic identifier-to-link mapping. A negotiation type field in the traffic identifier-to-link mapping information element carried in the request frame indicates a mode (namely, the first mode described above) used by a requester to negotiate the traffic identifier-to-link mapping. A negotiation type field in the traffic identifier-to-link mapping information element carried in the response frame indicates a mode (namely, the second mode described above) used by a responder to negotiate the traffic identifier-to-link mapping.

In a possible design, when the traffic identifier-to-link mapping information element is located in the request frame and the response frame, values of the negotiation type fields may indicate different meanings. In other words, the meaning indicated by the value of the negotiation type field needs to be determined based on a frame type (including the request frame and the response frame) in which the negotiation type field is located and a value of the negotiation type field.

For example, Table 8 is an example of possible values of the negotiation type field in the traffic identifier-to-link mapping information element carried in the request frame and meanings of the values. Table 9 is an example of values of the negotiation type field in the traffic identifier-to-link mapping information element carried in the response frame and meanings of the values.

**Table 8 Request frame**

| Negotiation type field | Meaning |
|---|---|
| First value | A traffic identifier-to-link mapping is requested to be established, but a specific traffic identifier-to-link mapping method is not carried. |
| Second value | A traffic identifier-to-link mapping is requested to be established, a mapping method suggested by a requester is carried (in a link profile), and a responder is allowed to modify a mapping relationship in a response frame. |
| Third value | A traffic identifier-to-link mapping is requested to be established, a mapping method demanded by a requester is carried (in a link profile), and a responder is not allowed to modify a mapping relationship in a response frame. |

It should be noted that Table 8 lists three possible values of the negotiation type field in the request frame, but it does not mean that the negotiation type field needs to include the three values. In actual application, the value of the negotiation type field may be only a part of the values in Table 8, or may further include a value other than the values listed in Table 8.

**Table 9 Response frame**

| Negotiation type field | Meaning |
|---|---|
| First value | A traffic identifier-to-link mapping is successfully established, and a final mapping method is carried (in a link profile). |
| Second value | A traffic-to-link mapping is not successfully established, and a suggested mapping method is carried (in a link profile). |
| Third value | A traffic-to-link mapping is not successfully established, a demanded mapping method is carried (in a link profile), and if a requester sends a request again, the mapping can be successfully established only by using the mapping. |
| Fourth value | A traffic identifier-to-link mapping fails to be established. |

It should be noted that Table 9 lists four possible values of the negotiation type field in the response frame, but it does not mean that the negotiation type field needs to include the four values. In actual application, the value of the negotiation type field may be only a part of the values in Table 9, or may further include a value other than the values listed in Table 9.

In another possible design, when the traffic identifier-to-link mapping information element is located in the request frame and the response frame, values of the negotiation type fields may indicate a same meaning. In other words, the meaning indicated by the value of the negotiation type field may be directly determined based on the value of the negotiation type field.

For example, Table 10 is an example of possible values of the negotiation type field in the traffic identifier-to-link mapping information element carried in the request frame or the response frame and meanings of the values.

**Table 10 Request frame or response frame**

| Negotiation type field | Meaning |
|---|---|
| First value: request (sent by a requester) | A traffic identifier-to-link mapping is requested to be established, but a specific traffic identifier-to-link mapping method is not carried. |
| Second value: suggest (sent by the requester) | A traffic identifier-to-link mapping is requested to be established, a mapping method suggested by the requester is carried (in a link profile), and a responder is allowed to modify a mapping relationship in a response frame. |
| Third value: demand (sent by the requester) | A traffic identifier-to-link mapping is requested to be established, a mapping method demanded by the requester is carried (in a link profile), and a responder is not allowed to modify a mapping relationship in a response frame. |
| Fourth value: accept (sent by a responder) | A traffic identifier-to-link mapping is successfully established, and a final mapping method is carried (in a link profile). |
| Fifth value: alternate (sent by the responder) | A traffic-to-link mapping is not successfully established, and a suggested mapping method is carried (in a link profile). |
| Sixth value: dictate (sent by the responder) | A traffic-to-link mapping is not successfully established, a demanded mapping method is carried (in a link profile), and if the requester sends a request again, the mapping can be successfully established only by using the mapping. |
| Seventh value: reject (sent by the responder) | A traffic identifier-to-link mapping fails to be established. |

It should be noted that the foregoing Table 10 lists seven possible values of the negotiation type fields in the request frame and the response frame, but it does not mean that the negotiation type field needs to include the seven values. In actual application, the value of the negotiation type field may be only a part of the values in Table 10, or may further include a value other than the values listed in Table 10.

Optionally, as shown in FIG. 12, the control field may further include ninth indication information, for example, a traffic direction (Direction) field (or another name, which is not limited herein), indicating a direction of traffic mapped to a link. A direction type may include downlink and uplink, and may further include both uplink and downlink (both UL and DL). A field length may be 1 bit or 2 bits. For example, a value of 0 of the field indicates uplink, a value of 1 indicates downlink, and a value of 3 indicates uplink and downlink.

Optionally, as shown in FIG. 12, the control field may further include a second preset field, for example, a default mode field (or another name, which is not limited herein), and a length may be 1 bit. When the default mode field is set to a preset value (for example, 1), it indicates that a default mapping manner is used. To be specific, all TIDs (or each TID) may be mapped to each link on which multi-link communication is established. In this case, the traffic identifier-to-link mapping information element may not carry traffic identifier-to-link mapping information, or the traffic identifier-to-link mapping information element carries only another field such as a control field, an element identifier, a length, or an element ID extension.

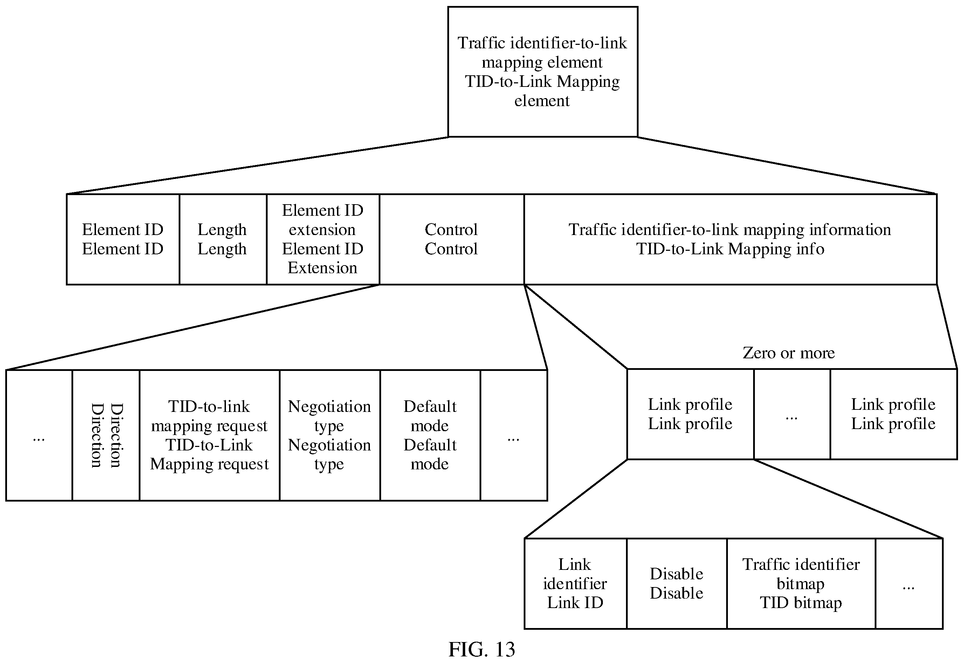

It should be understood that any traffic identifier-to-link mapping information field in the embodiment shown in FIG. 11A to FIG. 11D may be combined with any control field in the embodiment shown in FIG. 12. For example, FIG. 13 is a schematic diagram of a traffic identifier-to-link mapping information element obtained in one of the combination manners.

The following describes a method for using any one of the traffic identifier-to-link mapping information elements shown in FIG. 11A to FIG. 13.

One is that, in a multi-link establishment process, an association request frame (a third message) and an association response frame (a second message) carry a traffic identifier-to-link mapping information element, so that negotiation of a traffic identifier-to-link mapping is completed during multi-link establishment.

The other is that after completing multi-link establishment, if the multi-link device wants to update a traffic-to-link mapping relationship, an extremely high throughput (Extremely High Throughput, EHT) action frame (Action frame) may be defined, and the EHT action frame carries a traffic identifier-to-link mapping information element, to update the mapping relationship.

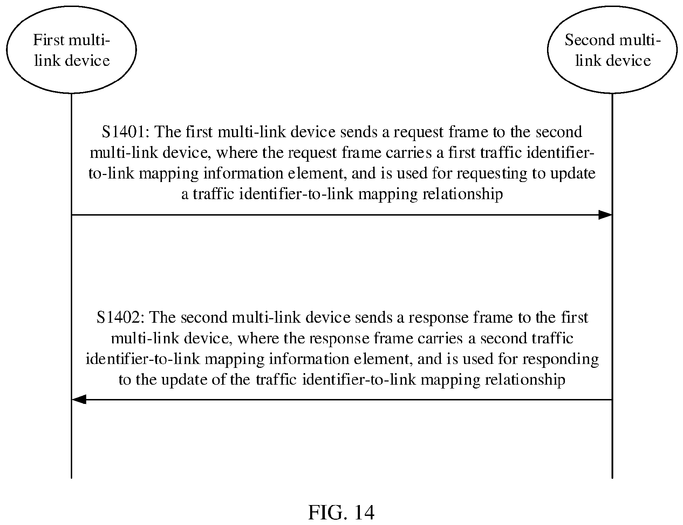

FIG. 14 is a flowchart of a method for updating a traffic identifier-to-link mapping relationship according to an embodiment of this application. The method may be applied to the communication system shown in FIG. 1.

S1401: A first multi-link device sends a request frame (a third message) to a second multi-link device, where the request frame carries a first traffic identifier-to-link mapping information element, and is used for requesting to update a traffic identifier-to-link mapping relationship.

S1402: The second multi-link device sends a response frame (second message) to the first multi-link device, where the response frame carries a second traffic identifier-to-link mapping information element, and is used for responding to the update of the traffic identifier-to-link mapping relationship.

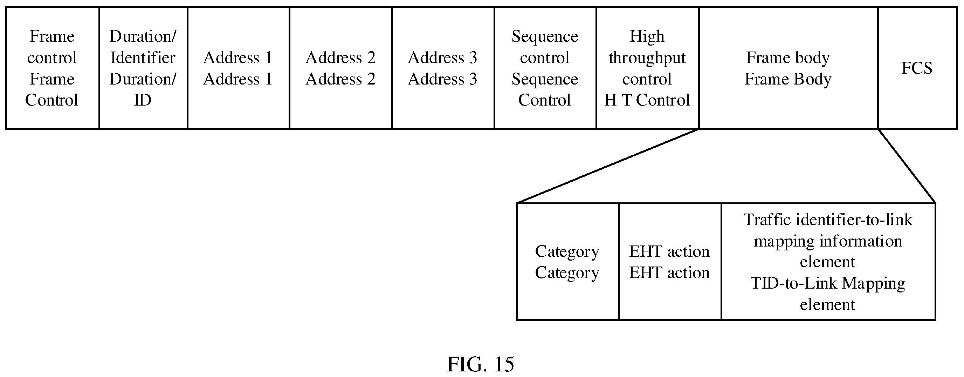

Both the request frame and the response frame are EHT action frames. FIG. 15 is a schematic diagram of a possible frame structure of an EHT action frame according to an embodiment of this application. A value of a category (Category) field may be "EHT", indicating an action frame in 802.11be.

To differentiate the request frame from the response frame, a value of a TID-to-link mapping request field in the traffic identifier-to-link mapping information element in the request frame may be set to 1, and a value of a TID-to-link mapping request field in the traffic identifier-to-link mapping information element in the response frame may be set to 0.

In an implementation, a value of an EHT action (EHT Action) field in the EHT action frame may be "TID-to-link mapping update information (TID-to-Link mapping update information)", indicating that the EHT action frame is used for updating the traffic identifier-to-link mapping relationship.

In another implementation, a value of an EHT action field in the request frame may be "a traffic identifier-to-link mapping request (TID-to-Link mapping update request)", and a value of an EHT action field in the response frame may be "a traffic identifier-to-link mapping request response (TID-to-Link mapping update response)". Table 10 is used as an example. When a value of a negotiation type field in the traffic identifier-to-link mapping information element in the response frame is a fourth value (accept), negotiation of the traffic identifier-to-link mapping relationship is completed. Otherwise, the first multi-link device may continue to send a request frame until a value of a negotiation type field in a received response frame is the fourth value (accept).

### 2. Broadcast mode

In this mode, the second multi-link device may be an AP MLD, and the first multi-link device may be a non-AP MLD.

The second multi-link device may include a traffic identifier-to-link mapping information element in a beacon frame, used for broadcasting traffic identifier-to-link mapping information to a station.

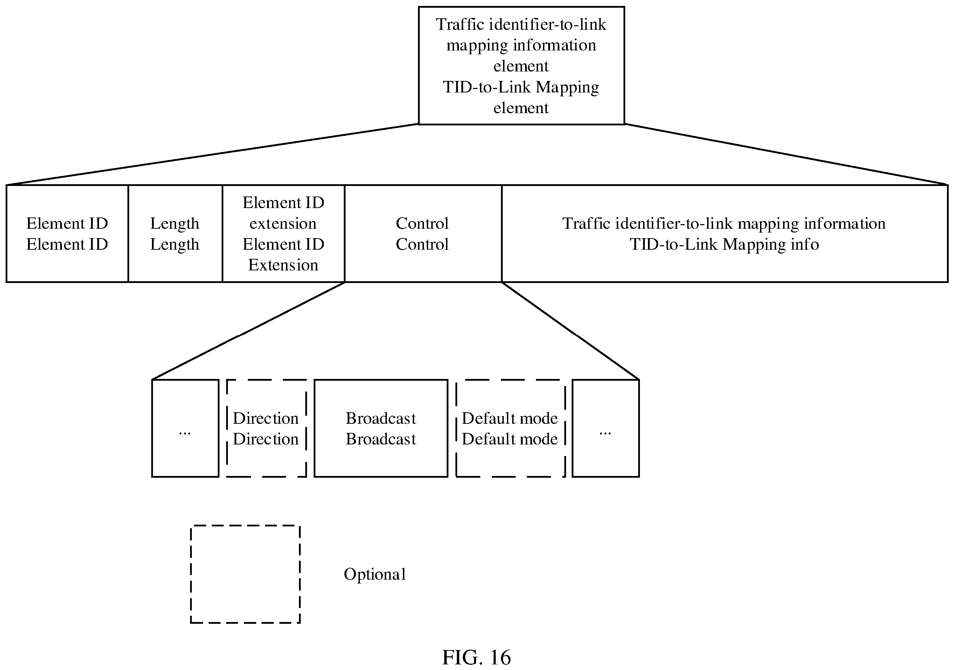

FIG. 16 is a schematic diagram of another traffic identifier-to-link mapping information element according to an embodiment of this application. The traffic identifier-to-link mapping information element may be carried in a beacon frame. A control field of the traffic identifier-to-link mapping information element includes a broadcast (Broadcast) field (sixth indication information), indicating that the current traffic identifier-to-link mapping information element carries broadcast traffic-to-link mapping information. In other words, the traffic-to-link mapping information may be sent to multiple stations, and is used by the multiple stations to perform traffic-to-link mapping.

Optionally, as shown in FIG. 16, the control field may further include a traffic direction (Direction) field, indicating a direction of traffic mapped to a link. A direction type may include downlink and uplink, and may further include both uplink and downlink (both UL and DL). A field length can be 1 bit or 2 bits. 0 indicates uplink, 1 indicates downlink, and 3 indicates uplink and downlink.

Optionally, as shown in FIG. 16, the control field may further include a default mode field, and a length may be 1 bit. When the default mode field is set to a preset value (for example, 1), it indicates that a default mapping manner is used. To be specific, all TIDs (or each TID) may be mapped to each link on which multi-link communication is established. In this case, the traffic identifier-to-link mapping information element may not carry traffic identifier-to-link mapping information, or the traffic identifier-to-link mapping information element carries only another field such as a control field, an element identifier, a length, or an element ID extension.

Before the second multi-link device broadcasts a beacon frame (the second message), a station multi-link device such as the first multi-link device may send seventh indication information to the second multi-link device, to indicate that a device type of the first multi-link device is a broadcast traffic identifier-to-link mapping supported device (broadcast TID-to-Link mapping supported MLD). Further, when the second multi-link device broadcasts the beacon frame, the first multi-link device receives a traffic identifier-to-link mapping information element in the beacon frame, and updates the traffic identifier-to-link mapping relationship thereof based on the traffic identifier-to-link mapping information element.

For a non-AP MLD, if the non-AP MLD is broadcast TID-to-link mapping supported, the non-AP MLD cannot send a traffic identifier-to-link mapping information element to the AP MLD to change the traffic identifier-to-link mapping relationship thereof.

In a specific implementation, in a multi-link establishment request, the non-AP MLD claims to be broadcast TID-to-link mapping supported. Specifically, seventh indication information may be carried in an association request frame, indicating that the non-AP MLD is broadcast TID-to-link mapping supported. The seventh indication information may be specifically carried in an EHT capabilities element (capabilities element). The AP MLD may reply with an association response frame, and the association response frame carries a traffic identifier-to-link mapping information element, used for assigning an initial value of a traffic identifier-to-link mapping relationship. After completing multi-link establishment, if the AP MLD wants to update the traffic identifier-to-link mapping relationship, the AP MLD may include a traffic identifier-to-link mapping information element in the beacon frame, used for broadcasting the current traffic identifier-to-link mapping information to the station. After receiving by the non-AP MLD, the non-AP needs to update the mapping relationship.

Optionally, in order for a sleeping non-AP MLD to receive a new mapping relationship after waking up, when content of the traffic identifier-to-link mapping information element carried in the beacon frame changes, the AP MLD needs to use this event as a critical update (critical update), and add one to a value of a check beacon field (check Beacon field) (namely, eighth indication information) in a next to-be-sent traffic indication bitmap (Traffic Indication Map, TIM) frame. After the non-AP MLD wakes up from sleep, the non-AP MLD may compare a value of the received check beacon frame field with the value of the check beacon frame field before sleep, to learn whether the AP MLD updates the mapping relationship, and when determining that the AP MLD updates the mapping relationship, update the mapping relationship based on content of a latest traffic identifier-to-link mapping information element.

Alternatively, the AP MLD may carry a counter field (namely, eighth indication information) in the beacon frame, for example, referred to as a traffic identifier-to-link mapping update counter (TID-to-Link mapping update counter). A value of the counter is initialized to 0. When content of the traffic identifier-to-link mapping information element changes, the count value of the counter is increased by 1.

A quantity of bits of the counter may be set and broadcast by an AP, or specified in a standard. This is not limited in this embodiment of this application. For example, it is assumed that the counter is represented by 8 bits, and a maximum value of the counter is 255. When the count value of the counter is greater than 255, a modulo operation (mod) is performed on 256, so that 255 plus 1 becomes 0.

After the non-AP MLD wakes up from sleep, the non-AP MLD may compare a value of a received counter frame field with the value of the counter frame field before sleep, to learn whether the AP MLD updates the mapping relationship, and when determining that the AP MLD updates the mapping relationship, update the mapping relationship based on content of a latest traffic identifier-to-link mapping information element.

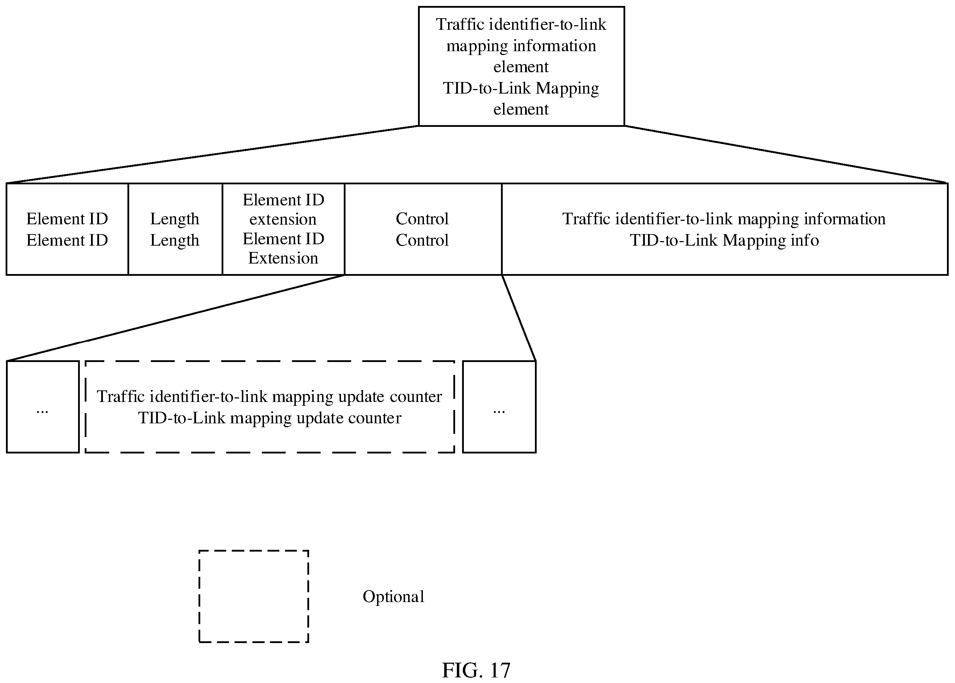

Optionally, as shown in FIG. 17, the counter may be carried in the traffic identifier-to-link mapping information element in the beacon frame.

S902: The first multi-link device establishes or updates the traffic-to-link mapping relationship based on the mapping information.

For example, if the second message is an association response frame sent by the second multi-link device to the first multi-link device in a multi-link establishment phase (in other words, the second message is a message used for establishing a mapping relationship), the first multi-link device establishes the identifier-to-link mapping relationship based on the identifier-to-link mapping information carried in the association response frame.

Alternatively, for example, if the second message is an EHT action frame sent by the second multi-link device to the first multi-link device after the multi-link establishment phase ends (in other words, the second message is a message used for updating the mapping relationship), the first multi-link device updates the identifier-to-link mapping relationship based on the identifier-to-link mapping information carried in the EHT action frame.

Alternatively, for example, if the second message is a beacon frame broadcast by the second multi-link device after the multi-link establishment phase ends (in other words, the second message is a message used for updating the mapping relationship), the first multi-link device updates the identifier-to-link mapping relationship based on the identifier-to-link mapping information carried in the beacon frame.

It can be learned from the foregoing that, in this embodiment of this application, the second multi-link device adds the traffic-to-link mapping information to the second message, so that the multi-link device can further establish a traffic-to-link mapping relationship during multi-link establishment, or update the traffic-to-link mapping relationship after completing multi-link establishment, to manage traffic more flexibly and improve quality of service.

It should be understood that embodiments provided in embodiments of this application may be combined with each other to implement different technical effects.
Further embodiments of the present invention are provided in the following. It should be noted that the numbering used in the following section does not necessarily need to comply with the numbering used in the previous sections.
1. A multi-link communication method, comprising:
   receiving, by a first multi-link device, a first request message sent by a second multi-link device, wherein the first request message carries identifiers of at least two links and first indication information of each of the at least two links, the first indication information indicates an operation type of the link, the operation type comprises establishing multi-link communication, and further comprises providing only link information or not establishing multi-link communication; and
   sending, by the first multi-link device, a first response message to the second multi-link device, wherein the first response message carries the identifiers of the at least two links and second indication information of each of the at least two links, and the second indication information indicates a status of the link.
2. A multi-link communication method, comprising:
   sending, by a second multi-link device, a first request message to a first multi-link device, wherein the first request message carries identifiers of at least two links and first indication information of each of the at least two links, the first indication information indicates an operation type of the link, the operation type comprises establishing multi-link communication, and further comprises providing only link information or not establishing multi-link communication;
   receiving, by the second multi-link device, a first response message from the first multi-link device, wherein the first response message carries the identifiers of the at least two links and second indication information of each of the at least two links, and the second indication information indicates a status of the link.
3. A multi-link device, comprising a processor, wherein the processor is coupled to a memory, and the processor is configured to execute a computer program or instructions stored in the memory, so that the device performs the following method:
   receiving a first request message sent by a second multi-link device, wherein the first request message carries identifiers of at least two links and first indication information of each of the at least two links, the first indication information indicates an operation type of the link, the operation type comprises establishing multi-link communication, and further comprises providing only link information or not establishing multi-link communication;
   sending a first response message to the second multi-link device, wherein the first response message carries the identifiers of the at least two links and second indication information of each of the at least two links, and the second indication information indicates a status of the link.
4. A multi-link device, comprising a processor, wherein the processor is coupled to a memory, and the processor is configured to execute a computer program or instructions stored in the memory, so that the device performs the following method:
   sending a first request message to a first multi-link device, wherein the first request message carries identifiers of at least two links and first indication information of each of the at least two links, the first indication information indicates an operation type of the link, the operation type comprises establishing multi-link communication, and further comprises providing only link information or not establishing multi-link communication;
   receiving a first response message from the first multi-link device, wherein the first response message carries the identifiers of the at least two links and second indication information of each of the at least two links, and the second indication information indicates a status of the link.
5. The method according to claim 1 or 2 or the device according to claim 3 or 4, wherein the operation type further comprises:
   adding a link to a multi-link communication link; and/or
   deleting a link from the multi-link communication link.
6. The method according to any one of claims 1, 2, and 5 or the device according to any one of claims 3, 4, and 5, wherein the status comprises any one or more of the following items:
   the multi-link communication is successfully established;
   the multi-link communication fails to be established;
   only the link information is provided or the multi-link communication is not established;
   the link is successfully added;
   the link fails to be added;
   the link is successfully deleted; or
   the link fails to be deleted.
7. The method according to any one of claims 1, 2, 5, and 6 or the device according to any one of claims 3 to 6, wherein the first indication information and/or the second indication information are/is carried in a first preset field in a multi-link information element.
8. The method according to claim 7 or the device according to claim 7, wherein
   in the multi-link information element carried in the first request message, a first value of the first preset field indicates that the operation type is establishing multi-link communication, and a second value of the first preset field indicates that the operation type is providing only link information or not establishing multi-link communication; or
   in the multi-link information element carried in the first response message, a first value of the first preset field indicates that the status is that the multi-link communication is successfully established, a second value of the first preset field indicates that the status is that the multi-link communication fails to be established, and a third value of the first preset field indicates that the status is that only the link information is provided or the multi-link communication is not established.
9. The method according to claim 7 or the device according to claim 7, wherein in the multi-link information element carried in the first request message or the first response message, a value of the first preset field comprises any one or more of the following items:
   a first value, indicating that the operation type is establishing multi-link communication;
   a second value, indicating that the status is that the multi-link communication is successfully established;
   a third value, indicating that the status is that the multi-link communication fails to be established; or
   a fourth value, indicating that the operation type or the status is that only the link information is provided or the multi-link communication is not established.
10. The method according to any one of claims 5 to 9 or the device according to any one of claims 5 to 9, wherein
   if the operation type is establishing multi-link communication, not establishing multi-link communication, providing only the link information, or adding the link to the multi-link communication link, the first request message further carries capability information of a station; or
   if the operation type is deleting the link from the multi-link communication link, the first request message does not carry capability information of a station.
11. The method according to any one of claims 7 to 9 or the device according to any one of claims 7 to 9, wherein the multi-link information element further carries information about a new link of an access point device; and
   a multi-link device MLD common information field of the multi-link information element carries third indication information, indicating that the multi-link information element carries information about the new link.
12. The method according to claim 11 or the device according to claim 11, wherein the information about the new link is carried in each beacon frame of N consecutive beacon frames, and N is a positive integer.
13. A traffic-to-link mapping method, comprising:
   receiving, by a first multi-link device, a second message from a second multi-link device, wherein the second message carries traffic-to-link mapping information; and
   establishing or updating, by the first multi-link device, a traffic-to-link mapping relationship based on the mapping information.
14. A traffic-to-link mapping method, comprising:
   generating, by a second multi-link device, a second message, wherein the second message carries traffic-to-link mapping information; and
   sending, by the second multi-link device, the second message to a first multi-link device.
15. A multi-link device, comprising a processor, wherein the processor is coupled to a memory, and the processor is configured to execute a computer program or instructions stored in the memory, so that the device performs the following method:
   receiving a second message from a second multi-link device, a second message, wherein the second message carries traffic-to-link mapping information; and
   establishing or updating a traffic-to-link mapping relationship based on the mapping information.
16. A multi-link device, comprising a processor, wherein the processor is coupled to a memory, and the processor is configured to execute a computer program or instructions stored in the memory, so that the device performs the following method:
   generating a second message, wherein the second message carries traffic-to-link mapping information; and
   sending the second message to a first multi-link device.
17. The method according to claim 13, wherein the second message further carries fourth indication information, and the fourth indication information indicates a second mode used for negotiating a traffic identifier-to-link mapping; and
   before the receiving, by a first multi-link device, a second message from a second multi-link device, the method further comprises:
   sending, by the first multi-link device, a third message to the second multi-link device, wherein the third message carries fifth indication information, and the fifth indication information indicates a first mode used for negotiating a traffic identifier-to-link mapping.
18. The method according to claim 14, wherein the second message further carries fourth indication information, and the fourth indication information indicates a second mode used for negotiating a traffic identifier-to-link mapping; and
   before the generating, by a second multi-link device, a second message, the method further comprises:
   receiving, by a second multi-link device, a third message from the first multi-link device, wherein the third message carries fifth indication information, and the fifth indication information indicates a first mode used for negotiating a traffic identifier-to-link mapping.
19. The device according to claim 15, wherein the second message further carries fourth indication information, and the fourth indication information indicates a second mode used for negotiating a traffic identifier-to-link mapping; and
   the processor is further configured to execute the computer program or the instructions stored in the memory, so that the device performs the following method:
   before receiving the second message from the second multi-link device, send a third message to the second multi-link device, wherein the third message carries fifth indication information, and the fifth indication information indicates a first mode used for negotiating a traffic identifier-to-link mapping.
20. The device according to claim 16, wherein the second message further carries fourth indication information, and the fourth indication information indicates a second mode used for negotiating a traffic identifier-to-link mapping; and
   the processor is further configured to execute the computer program or the instructions stored in the memory, so that the device performs the following method:
   before generating the second message, receive a third message from the first multi-link device, wherein the third message carries fifth indication information, and the fifth indication information indicates a first mode used for negotiating a traffic identifier-to-link mapping.
21. The method according to claim 17 or 18 or the device according to claim 19 or 20, wherein the first mode is:
   a traffic-to-link mapping is requested to be established, but a specific traffic-to-link mapping method is not carried;
   a traffic-to-link mapping is requested to be established, a suggested mapping method is carried, and a responder is allowed to modify a mapping relationship in a response frame; or
   a traffic-to-link mapping is requested to be established, a demanded mapping method is carried, and a responder is not allowed to modify a mapping relationship in a response frame.
22. The method according to claim 17 or 18 or the device according to claim 19 or 20, wherein the second mode is:
   the traffic-to-link mapping is successfully established, and a final mapping method is carried;
   the traffic-to-link mapping is not successfully established, and the suggested mapping method is carried;
   the traffic-to-link mapping is not successfully established, the demanded mapping method is carried, and if a requester sends a request again, the mapping can be successfully established only by using the mapping method; or
   the traffic-to-link mapping fails to be established.
23. The method according to any one of claims 17, 18, 21, and 22 or the device according to any one of claims 19, 20, 21, and 22, wherein the second message is an association response frame or an EHT action frame.
24. The method according to claim 13 or 14 or the device according to claim 15 or 16, wherein the second message is a broadcast message.
25. The method according to claim 24, wherein before the receiving, by a first multi-link device, a second message from a second multi-link device, the method further comprises:
   sending, by the first multi-link device, a fourth message to the second multi-link device, wherein the fourth message carries seventh indication information, and the seventh indication information indicates that the first multi-link device supports broadcast traffic-to-link mapping information.
26. The method according to claim 24, wherein before the generating, by a second multi-link device, a second message, the method further comprises:
   receiving, by the second multi-link device, a fourth message from a first multi-link device, wherein the fourth message carries seventh indication information, and the seventh indication information indicates that the first multi-link device supports broadcast traffic-to-link mapping information.
27. The device according to claim 24, wherein the processor is further configured to execute the computer program or the instructions stored in the memory, so that the device performs the following method:
   before receiving the second message from the second multi-link device, sending a fourth message to the second multi-link device, wherein the fourth message carries seventh indication information, and the seventh indication information indicates that the device supports broadcast traffic-to-link mapping information.
28. The device according to claim 24, wherein the processor is further configured to execute the computer program or the instructions stored in the memory, so that the device performs the following method:
   before generating the second message, receiving a fourth message from a first multi-link device, wherein the fourth message carries seventh indication information, and the seventh indication information indicates that the first multi-link device supports broadcast traffic-to-link mapping information.
29. The method according to any one of claims 24, 25, and 26 or the device according to any one of claims 24, 27, and 28, wherein the second message further carries eighth indication information, indicating an accumulative quantity of updates of traffic-to-link mapping information.
30. The method according to any one of claims 24, 25, 26, and 29 or the device according to any one of claims 24, 27, 28, and 29, wherein the second message is an association response frame or a beacon frame.
31. The method according to any one of claims 13, 14, 17, 18, 21 to 26, 29, and 30 or the device according to any one of claims 15, 16, 19 to 24, and 27 to 30, wherein the second message further comprises ninth indication information, indicating a traffic direction of the traffic-to-link mapping, and the traffic direction is any one of uplink, downlink, or uplink and downlink.
32. The method according to any one of claims 13, 14, 17, 18, 21 to 26, and 29 to 31, or the device according to any one of claims 15, 16, 19 to 24, and 27 to 31, wherein the traffic-to-link mapping information is carried in a media access control MAC header or in an information element indicating the traffic-to-link mapping relationship.
33. The method according to claim 32 or the device according to claim 32, wherein the information element indicating the traffic-to-link mapping relationship carries a second preset field, and when the second preset field is a preset value, the second preset field indicates the first multi-link device to map each traffic identifier to each link on which multi-link communication is established.
34. The method according to claim 33 or the device according to claim 33, wherein when the second preset field is a preset value, the information element indicating the traffic-to-link mapping relationship does not carry the traffic-to-link mapping information.
35. The method according to claim 17 or 18 or the device according to claim 19 or 20, wherein the fourth indication information and/or the fifth indication information are/is carried in a third preset field in an information element indicating the traffic-to-link mapping relationship; and in the information element indicating the traffic-to-link mapping relationship carried in the third message or the fourth message, a value of the third preset field comprises any one or more of the following items:
   a first value, indicating that the second mode is that a traffic-to-link mapping is requested to be established, but a specific traffic-to-link mapping method is not carried;
   a second value, indicating that the second mode is that a traffic-to-link mapping is requested to be established, a suggested mapping method is carried, and a responder is allowed to modify a mapping relationship in a response frame;
   a third value, indicating that the second mode is that a traffic-to-link mapping is requested to be established, a demanded mapping method is carried, and a responder is not allowed to modify a mapping relationship in a response frame;
   a fourth value, indicating that the first mode is that the traffic-to-link mapping is successfully established, and a final mapping method is carried;
   a fifth value, indicating that the first mode is that the traffic-to-link mapping is not successfully established, and the suggested mapping method is carried;
   a sixth value, indicating that the first mode is that the traffic-to-link mapping is not successfully established, the demanded mapping method is carried, and if a requester sends a request again, the mapping can be successfully established only by using the mapping method; or
   a seventh value, indicating that the first mode is that the traffic-to-link mapping fails to be established.
36. The method according to any one of claims 13, 14, 17, 18, 21 to 26, and 29 to 35 or the device according to any one of claims 15, 16, 19 to 24, and 27 to 35, wherein the traffic-to-link mapping information comprises:
   one or more link profile fields, wherein each link profile field comprises identifier information of one link and identifier information of one or more pieces of traffic mapped to the link; or
   one or more traffic profile fields, wherein each traffic profile field comprises identifier information of one traffic and identifier information of one or more links to which the traffic is mapped.
37. The method according to any one of claims 13, 14, 17, 18, 21 to 26, and 29 to 31 or the device according to any one of claims 15, 16, 19 to 24, and 27 to 31, wherein the second message comprises an information element indicating the traffic-to-link mapping relationship, the information element carries a second preset field, and the second preset field indicates the first multi-link device to establish or update the traffic-to-link mapping relationship in a default mapping manner.
38. The method according to claim 37 or the device according to claim 37, wherein the default mapping manner comprises: mapping, by the first multi-link device, each traffic identifier to each link on which multi-link communication is established.
39. The method according to claim 37 or the device according to claim 37, wherein the information element indicating the traffic-to-link mapping relationship does not carry the traffic-to-link mapping information.
40. The method according to claim 37 or the device according to claim 37, wherein a length of the second preset field is 1 bit; and when a value of the second preset field is 1, the second preset field indicates the first multi-link device to establish or update the traffic-to-link mapping relationship in a default mapping manner.
41. A chip, wherein the chip is coupled to a memory, and is configured to read and execute program instructions stored in the memory, so that the method according to any one of claims 1 and 5 to 12, the method according to any one of claims 2 and 5 to 12, the method according to any one of claims 13, 17, 21 to 24, 25, and 29 to 40, or the method according to any one of claims 14, 18, 21 to 24, 26, and 29 to 40 is performed.
42. A communication apparatus, comprising:
   a transceiver module, configured to communicate with another communication apparatus other than the communication apparatus; and
   a processing module, configured to perform, by using the transceiver module, the method according to any one of claims 1 and 5 to 12, the method according to any one of claims 2 and 5 to 12, the method according to any one of claims 13, 17, 21 to 24, 25, and 29 to 40, or the method according to any one of claims 14, 18, 21 to 24, 26, and 29 to 40.
43. A computer program product, comprising instructions, wherein when the computer program product runs on a computer, the method according to any one of claims 1 and 5 to 12, the method according to any one of claims 2 and 5 to 12, the method according to any one of claims 13, 17, 21 to 24, 25, and 29 to 40, or the method according to any one of claims 14, 18, 21 to 24, 26, and 29 to 40 is performed.
44. A computer-readable storage medium, comprising a program or instructions, wherein when the program or the instructions runs or are run on a computer, the method according to any one of claims 1 and 5 to 12, the method according to any one of claims 2 and 5 to 12, the method according to any one of claims 13, 17, 21 to 24, 25, and 29 to 40, or the method according to any one of claims 14, 18, 21 to 24, 26, and 29 to 40 is performed.
45. A computer program, wherein when the computer program runs on a computer, the method according to any one of claims 1 and 5 to 12, the method according to any one of claims 2 and 5 to 12, the method according to any one of claims 13, 17, 21 to 24, 25, and 29 to 40, or the method according to any one of claims 14, 18, 21 to 24, 26, and 29 to 40 is performed.

The terms "system" and "network" may be used interchangeably in embodiments of this application. "At least one" means one or more, and "multiple" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c.

In addition, unless otherwise stated, ordinal numbers such as "first" and "second" in embodiments of this application are used to distinguish between multiple objects, but are not intended to limit an order, a time sequence, priorities, or importance of the multiple objects. For example, a first priority criterion and a second priority criterion are merely used to distinguish between different criteria, but do not indicate different content, priorities, importance, or the like of the two criteria.

In addition, the terms "include" and "have" in embodiments, claims, and accompanying drawings of this application are not exclusive. For example, a process, a method, a system, a product, or a device including a series of steps or modules is not limited to the listed steps or modules, and may further include steps or modules that are not listed.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

Clearly, a person skilled in the art can make various modifications and variations to embodiments of this application without departing from the spirit and scope of this application. This application is intended to cover these modifications and variations provided that they fall within the scope of protection defined by the following claims of this application and their equivalent technologies.

## Claims

1. A multi-link communication method, comprising:
sending, by a second multi-link device, a first request message to a first multi-link device, wherein the first request message carries an identifier of one or more links and first indication information of each of the one or more links, the first indication information indicates an operation type of the link, the operation type comprises one or more of: adding a link to a multi-link communication link and deleting a link from the multi-link communication link;
receiving, by the second multi-link device, a first response message from the first multi-link device, wherein the first response message carries the identifiers of the one or more links and second indication information of each of the one or more links, and the second indication information indicates a status of the link.

2. The method according to claim 1, wherein the operation type further comprises:
establishing multi-link communication; and/or
providing only link information or not establishing multi-link communication.

3. The method according to claim 1 or 2, wherein the status comprises any one or more of the following items:
the multi-link communication is successfully established;
the multi-link communication fails to be established;
only the link information is provided or the multi-link communication is not established;
the link is successfully added;
the link fails to be added;
the link is successfully deleted; or
the link fails to be deleted.

4. The method according to claim 1 or 2, wherein the first indication information and/or the second indication information are/is carried in a first preset field in a multi-link information element.

5. The method according to claim 4, wherein in the multi-link information element carried in the first request message or the first response message, a value of the first preset field comprises any one or more of the following items:
a first value, indicating that the operation type is adding a link to a multi-link communication link;
a second value, indicating that the operation type is deleting a link from the multi-link communication link;
a third value, indicating that the status is that the link is successfully added;
a fourth value, indicating that the status is that the link fails to be added;
a fifth value, indicating that the status is that the link is successfully deleted; or
a sixth value, indicating that the status is that the link fails to be deleted.

6. The method according to any one of claims 2 to 5, wherein
if the operation type is establishing multi-link communication, not establishing multi-link communication, providing only the link information, or adding the link to the multi-link communication link, the first request message further carries capability information of a station; or
if the operation type is deleting the link from the multi-link communication link, the first request message does not carry capability information of a station.

7. A multi-link communication method, comprising:
receiving, by a first multi-link device, a first request message sent by a second multi-link device, wherein the first request message carries an identifier of one or more links and first indication information of each of the one or more links, the first indication information indicates an operation type of the link, the operation type comprises one or more of: adding a link to a multi-link communication link and deleting a link from the multi-link communication link; and
sending, by the first multi-link device, a first response message to the second multi-link device, wherein the first response message carries the identifiers of the one or more links and second indication information of each of the one or more links, and the second indication information indicates a status of the link.

8. The method according to claim 7, wherein the operation type further comprises:
establishing multi-link communication; and/or
providing only link information or not establishing multi-link communication.

9. The method according to claim 7 or 8, wherein the status comprises any one or more of the following items:
the multi-link communication is successfully established;
the multi-link communication fails to be established;
only the link information is provided or the multi-link communication is not established;
the link is successfully added;
the link fails to be added;
the link is successfully deleted; or
the link fails to be deleted.

10. The method according to claim 7 or 8, wherein the first indication information and/or the second indication information are/is carried in a first preset field in a multi-link information element.

11. The method according to claim 10, wherein in the multi-link information element carried in the first request message or the first response message, a value of the first preset field comprises any one or more of the following items:
a first value, indicating that the operation type is adding a link to a multi-link communication link;
a second value, indicating that the operation type is deleting a link from the multi-link communication link;
a third value, indicating that the status is that the link is successfully added;
a fourth value, indicating that the status is that the link fails to be added;
a fifth value, indicating that the status is that the link is successfully deleted; or
a sixth value, indicating that the status is that the link fails to be deleted.

12. The method according to any one of claims 8 to 11, wherein
if the operation type is establishing multi-link communication, not establishing multi-link communication, providing only the link information, or adding the link to the multi-link communication link, the first request message further carries capability information of a station; or
if the operation type is deleting the link from the multi-link communication link, the first request message does not carry capability information of a station.

13. A communication apparatus, comprising:
a transceiver module, configured to communicate with another communication apparatus other than the communication apparatus; and
a processing module, configured to perform, by using the transceiver module, the method according to any one of claims 1 to 6.

14. A communication apparatus, comprising:
a transceiver module, configured to communicate with another communication apparatus other than the communication apparatus; and
a processing module, configured to perform, by using the transceiver module, the method according to any one of claims 7 to 12.

15. A chip, wherein the chip is coupled to a memory, and is configured to read and execute program instructions stored in the memory, so that the method according to any one of claims 1 to 12 is performed.
